# EUROPEAN PATENT APPLICATION

(11) **EP 4 625 291 A1**
(43) Date of publication of application: **01.10.2025**
(21) Application number: 23893642.1
(22) Date of filing: 09.11.2023
(51) Int. Cl.: G06Q 20/02, G06Q 20/38, G06Q 20/40

(54) **DIGITAL PAYMENT PROCESSING METHOD AND APPARATUS, AND DEVICE, SYSTEM AND MEDIUM**

(30) Priority: 23.11.2022 CN 202211475576
(71) Applicant: China Unionpay Co., Ltd., Shanghai 200135 (CN)
(72) Inventor: TAO, Ranzhi, Shanghai 200135 (CN); XIE, Rongdong, Shanghai 200135 (CN)
(74) Representative: Körfer, Thomas
(86) International application number: PCT/CN2023/130737
(87) International publication number: WO 2024/109551

(57) **Abstract**

The present application belongs to the field of new generation of information technology. Disclosed are a digital payment processing method and apparatus, and a device, a system and a medium. The method comprises: by means of a payment routing gateway device, receiving a digital seal and an order key element signature, which are sent by a payment information service provider service platform, wherein the digital seal and the order key element signature are generated by the payment information service provider service platform according to order information and a digital credential, the digital credential is generated by a digital credential platform and comprises static account data ciphertext and account carrier information, and the static account data ciphertext is obtained by performing encryption according to static account data; verifying the digital seal and the order key element signature to obtain a transaction element signature; and transmitting the transaction element signature to an account management platform by means of the payment routing gateway device, so that the account management platform verifies the transaction element signature, and completes payment according to a verification result.

## Description

### CROSS-REFERENCE TO RELATED APPLICATIONS

The present application claims priority to Chinese patent application 202211475576.4, filed on November 23, 2022, and entitled "DIGITAL PAYMENT PROCESSING METHOD AND APPARATUS, AND DEVICE, SYSTEM AND MEDIUM", the entire contents of which application are incorporated herein by reference.

### Technical Field

The present application belongs to the field of new generation information technology, and in particular, relates to a digital payment processing method and apparatus, and device, system and medium.

### Background

With the continuous development of payment technology and digital technology, the application scope of electronic payment is becoming wider and wider. Users can use the card wallet client with payment function to realize offline scene consumption, online scene consumption, transfer and other functions. Account management parties such as issuing banks can manage the funds in user accounts, and clearing institutions can manage and execute clearing. However, due to the widespread application of electronic payment, electronic card wallets have become the carrier of accounts, weakening the key data acquisition capabilities of account management parties and clearing institution parties. In the absence of key data acquisition capabilities of the account management parties and clearing institution parties, the capability to ensure the security of electronic payments of accounts is weakened.

### Summary

The embodiments of the present application provide a digital payment processing method and apparatus, and device, system and medium, which can improve the capability to ensure the security of electronic payments for accounts.

In a first aspect, an embodiment of the present application provides a performed by a digital credential platform, where the method includes: receiving, through a payment routing gateway device, a digital seal and an order key element signature sent by a payment information service provider business platform, where the digital seal and the order key element signature are generated by the payment information service provider business platform according to order information associated with a payment and a digital credential in a payment message associated therewith, the digital credential is generated by the digital credential platform and includes an account static data ciphertext and account carrier information, the account static data ciphertext is obtained by encrypting account static data, and the account static data represents account information associated with a payment account; verifying the digital seal and the order key element signature to obtain a transaction element signature; and transmitting the transaction element signature to an account management platform through the payment routing gateway device, to cause the account management platform to verify the transaction element signature and complete the payment according to a verification result.

In a second aspect, an embodiment of the present application provides a digital payment processing method, performed by a payment information service provider business platform, where the method includes: receiving a payment message sent by a user terminal, where the payment message includes a digital credential, the digital credential is generated by a digital credential platform and includes an account static data ciphertext and account carrier information, the account static data ciphertext is obtained by encrypting account static data, and the account static data represents account information associated with a payment account; generating a digital seal and an order key element signature according to order information associated with a payment and the digital credential; and sending the digital seal and the order key element signature to the digital credential platform through a payment routing gateway device, to cause that the digital credential platform verifies the digital seal and the order key element signature to obtain a transaction element signature and transmits the transaction element signature to the account management platform through the payment routing gateway device, and to cause the account management platform to verify the transaction element signature and complete the payment according to a verification result.

In a third aspect, an embodiment of the present application provides a digital payment processing apparatus, applied to a digital credential platform, and including: a first receiving module, configured to receive, through a payment routing gateway device, a digital seal and an order key element signature sent by a payment information service provider business platform, where the digital seal and the order key element signature are generated by the payment information service provider business platform according to order information associated with a payment and a digital credential in a payment message associated therewith, the digital credential is generated by the digital credential platform and includes an account static data ciphertext and account carrier information, the account static data ciphertext is obtained by encrypting account static data, and the account static data represents account information associated with a payment account; a first processing module, configured to verify the digital seal and the order key element signature to obtain a transaction element signature; and a first sending module, configured to transmit the transaction element signature to an account management platform through the payment routing gateway device, to cause the account management platform to verify the transaction element signature and complete the payment according to a verification result.

In a fourth aspect, an embodiment of the present application provides a digital payment processing apparatus, applied to a payment information service provider business platform, and including: a second receiving module, configured to receive a payment message sent by a user terminal, where the payment message includes a digital credential, the digital credential is generated by a digital credential platform and includes an account static data ciphertext and account carrier information, the account static data ciphertext is obtained by encrypting account static data, and the account static data represents account information associated with a payment account; a second processing module, configured to generate a digital seal and an order key element signature according to order information associated with a payment and the digital credential; and a second sending module, configured to send the digital seal and the order key element signature to the digital credential platform through a payment routing gateway device, to cause that the digital credential platform verifies the digital seal and the order key element signature to obtain a transaction element signature and transmits the transaction element signature to the account management platform through the payment routing gateway device, and to cause the account management platform to verify the transaction element signature and complete the payment according to a verification result.

In a fifth aspect, an embodiment of the present application provides an electronic device, including: a processor and a memory storing computer program instructions; where the processor is configured to, when executing the computer program instructions, implement the digital payment processing method of the first aspect.

In a sixth aspect, an embodiment of the present application provides an electronic device, including: a processor and a memory storing computer program instructions; where the processor is configured to, when executing the computer program instructions, implement the digital payment processing method of the second aspect.

In the seventh aspect, an embodiment of the present application provides a digital payment processing system, including: a digital credential platform for executing the digital payment processing method of the first aspect; and a payment information service provider business platform for executing the digital payment processing method of the second aspect.

In an eighth aspect, an embodiment of the present application provides a computer-readable storage medium, storing computer program instructions, where when the computer program instructions are executed by a processor, the digital payment processing method of the first aspect or the digital payment processing method of the second aspect.

The embodiments of the present application provide the digital payment processing method and apparatus, and device, system and medium. The digital credential platform can receive the digital seal and the order key element signature, verify the digital seal and the order key element to obtain the transaction element signature, and transmit the transaction element signature to the account management platform, so that the account management platform verifies the transaction element signature and completes the payment according to the verification result. The digital seal and the order key element signature are generated by the payment information service provider business platform according to the order information associated with the payment and the digital credential in the payment message. In the process of verifying the digital seal and the order key element signature by the digital credential platform, the account information, the account carrier information, and the information obtained based on the order information can be obtained, so that the clearing institution party to which the digital credential platform belongs can obtain the information of the account, the account carrier, and the order in the payment link, and enhance the key data acquisition capability of the clearing institution party. The transaction element signature can reflect the account information, the account carrier information and the order information. In the process of verifying the transaction element signature by the account management platform, the account management party to which the account management platform belongs can obtain the information of the account, the account carrier, and the order in the payment link, and enhance the key data acquisition capability of the account management party. The enhancement of the key data acquisition capability of the clearing institution party and the account management party improves the capability to ensure the electronic payment security of the account.

### Brief Description of Figures

In order to more clearly illustrate the technical solution of the embodiments of the present application, the following is a brief introduction to the drawings required for use in the embodiments of the present application. For ordinary skilled persons in the art, other drawings can be obtained based on these drawings without any creative work.
FIG. 1 is a schematic diagram of an example of a multi-party architecture involved in digital payment processing provided by embodiments of the present application.
FIG. 2 is a flow chart of a digital payment processing method provided by an embodiment of the first aspect of the present application.
FIG. 3 is a flow chart of a digital payment processing method provided by another embodiment of the first aspect of the present application.
FIG. 4 is a flow chart of a digital payment processing method provided by yet another embodiment of the first aspect of the present application.
FIG. 5 is a flow chart of a digital payment processing method provided by an embodiment of the second aspect of the present application.
FIG. 6 is a flow chart of a digital payment processing method provided by another embodiment of the second aspect of the present application.
FIG. 7 is a flow chart of a digital payment processing method provided by yet another embodiment of the second aspect of the present application.
FIG. 8 is a schematic diagram of an example of a payment process for a merchant client initiating payment provided by an embodiment of the present application.
FIG. 9 is a schematic diagram of an example of a payment process of scanning code to pay provided by an embodiment of the present application.
FIG. 10 is a schematic diagram of an example of a payment process of being paid by scanning code provided by an embodiment of the present application.
FIG. 11 is a schematic diagram of an example of a payment process of offline payment provided by an embodiment of the present application.
FIG. 12 is a schematic diagram of an example of a digital credential acquisition process using a digital credential pulling method provided by an embodiment of the present application.
FIG. 13 is a schematic diagram of an example of a digital credential acquisition process using a digital credential pushing method provided by an embodiment of the present application.
FIG. 14 is a schematic structural diagram of a digital payment processing apparatus provided by an embodiment of the third aspect of the present application.
FIG. 15 is a schematic structural diagram of a digital payment processing apparatus provided by an embodiment of the fourth aspect of the present application.
FIG. 16 is a schematic structural diagram of an electronic device provided by an embodiment of the fifth aspect of the present application.

### Detailed Description

The features and exemplary embodiments of various aspects of the present application will be described in detail below. In order to make the purpose, technical solutions and advantages of the present application clearer, the present application will be further described in detail below in conjunction with the accompanying drawings and specific embodiments. It should be understood that the specific embodiments described herein are only intended to explain the present application, rather than to limit the present application. For those skilled in the art, the present application can be implemented without the need for some of these specific details. The following description of the embodiments is only to provide a better understanding of the present application by illustrating the examples of the present application.

With the continuous development of payment technology and digital technology, the application scope of electronic payment is becoming wider and wider. Users can use the card wallet client with payment function to realize offline scene consumption, online scene consumption, transfer and other functions. Account management parties such as issuing banks can manage the funds in user accounts, and clearing institutions can manage and execute clearing. However, due to the widespread application of electronic payment, electronic card wallets have become the carrier of accounts, weakening the key data acquisition capabilities of account management parties and clearing institution parties. In the absence of key data acquisition capabilities of the account management parties and clearing institution parties, the capability to ensure the security of electronic payments for accounts is weakened.

The present application provides a digital payment processing method and apparatus, and device, system and medium, which can generate a digital credential, and obtain a transaction element signature that can reflect payment information, account information and account carrier information by verifying and processing a digital seal and an order key element signature generated based on the digital credential and order information, and complete payment according to the verification result of the transaction element signature. Through the digital credential platform, a unified digital processing and verification technology is provided, and the digital payment processing is jointly realized in combination with the payment information service provider business platform, account management platform, etc., to improve the key data acquisition capability of the account management party and the clearing institution party, thereby enhancing the capability to ensure the security of electronic payments of accounts.

It should be noted that the acquisition, storage, use, and processing of information and data in the embodiments of the present application are authorized by users or relevant institutions and comply with relevant provisions of national laws and regulations.

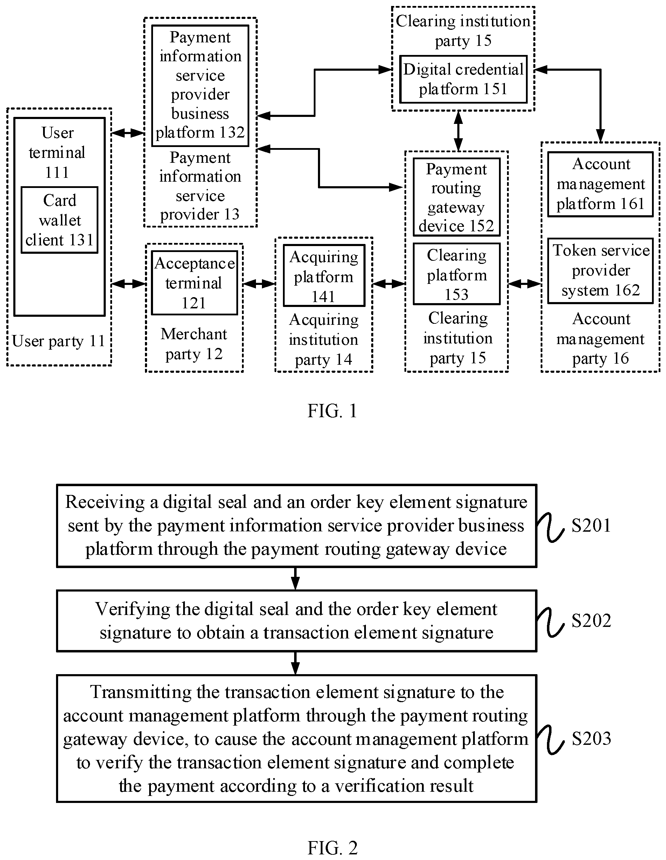

For ease of understanding, the multi-party architecture involved in digital payment processing is first described herein. FIG. 1 is a schematic diagram of an example of a multi-party architecture involved in digital payment processing provided by an embodiment of the present application. As shown in FIG. 1, the multiple parties involved in digital payment processing may include a user party 11, a merchant party 12, a payment information service provider 13, an acquiring institution party 14, a clearing institution party 15, and an account management party 16.

The devices involved in the user party 11 may include a user terminal 111. The user terminal 111 may include a terminal device that can make payments, such as a mobile phone, a tablet computer, a wearable device, etc., and the type of the user terminal 111 is not limited herein. The user terminal 111 may support payment methods such as payment initiated by an e-commerce application and payment by scanning a code. The user terminal 111 may have a card wallet client 131, and the card wallet client 131 may be implemented as an application, such as an electronic wallet client, an electronic card wallet client, etc. The user terminal 111 may further have other clients with the payment function, for example, it may have a code display/code scanning client, and the code display/code scanning client has the function of displaying a graphic code and scanning a graphic code.

The device involved in the merchant party 12 may include an acceptance terminal 121, and the acceptance terminal 121 may accept order payments initiated by the user terminal 111 or the merchant party 12.

The payment information service provider 13 may provide card wallet business services. The payment information service provider 13 may involve a payment information service provider business platform 132 and a card wallet client 131 in the user terminal 111. Different payment information service providers may correspond to different payment information service provider business platforms 132 and card wallet clients 131. The payment information service provider business platform 132 may exchange information with the card wallet client 131. The payment information service provider business platform 132 may be the background system of the card wallet client 131, and may include a single or multiple electronic devices such as servers, and the number and type of electronic devices in the payment information service provider business platform 132 are not limited here.

The acquiring institution party 14 may provide acquiring business services. The acquiring institution party 14 may involve an acquiring platform 141. The acquiring platform 141 may exchange information with the acceptance terminal 121. The acquiring platform 141 may include a single or multiple electronic devices such as servers, and the number and type of electronic devices in the acquiring platform 141 are not limited here.

The clearing institution party 15 may involve a digital credential platform 151, a payment routing gateway device 152 and a clearing platform 153. The payment routing gateway device 152 may exchange information with the digital credential platform 151, the payment information service provider business platform 132 and the acquiring platform 141. The digital credential platform 151 may exchange information with the payment information service provider business platform 132 and the acquiring platform 141 through the payment routing gateway device 152. The digital credential platform 151 may realize functions such as the generation of digital credentials, the verification and processing of digital seals and order key element signatures, and the specific contents may be found in the relevant descriptions below. The digital credential platform 151 and the clearing platform 153 may each include a single or multiple electronic devices such as servers, and the type and number of the electronic devices are not limited here. The number of payment routing gateway devices 152 in the multi-party architecture of the digital payment processing is also not limited here.

The account management party 16 may involve an account management platform 161 and a token service provider (TSP) system 162. Different account management parties 16 have different account management platforms 161. In some examples, the functions of the token service provider system may also be integrated into the account management platform 161, which is not limited here. The account management platform 161 can manage the user's account. The user's account may include a bank card account or other types of accounts, which are not limited here. During the payment process, the account management platform 161 may transfer resources such as funds in the user's account in or out according to payment requirements. The account management platform 161 may exchange information with the clearing platform 153. The account management platform 161 may include a single or multiple electronic devices such as servers, and the type and number of electronic devices are not limited here. The token service provider system 162 may generate a payment identifier, i.e., a payment token, which may replace highly confidential data such as a bank card number for payment during the electronic payment process. The token service provider system 162 may exchange information with the digital credential platform 151. The token service provider system 162 may include a single or multiple electronic devices such as servers, and the type and number of the electronic devices are not limited herein.

The digital payment processing method and apparatus, and device, system and medium provided by the present application are introduced below.

The first aspect of the present application provides a digital payment processing method, which can be applied to a digital credential platform, that is, the digital payment processing method can be performed by the digital credential platform. FIG. 2 is a flow chart of a digital payment processing method provided by an embodiment of the first aspect of the present application. As shown in FIG. 2, the digital payment processing method may include steps S201 to S203.

In step S201, a digital seal and an order key element signature sent by the payment information service provider business platform are received through the payment routing gateway device.

When the user terminal requests payment, the digital credential can be transmitted to the payment information service provider business platform through a payment message including the digital credential. The payment information service provider business platform can generate the digital seal and the order key element signature based on the order information and the digital credential associated with the payment, and transmit the digital seal and the order key element signature to the digital credential platform through the payment routing gateway device.

The digital seal and the order key element signature are generated by the payment information service provider business platform according to the order information associated with the payment and the digital credential in the payment message. In some examples, the payment message can be sent by the user terminal to request payment. The digital seal can be implemented as ciphertext information, which can be obtained by encrypting at least part of the information in the digital credential and the information obtained based on the order information. The digital credential is generated by the digital credential platform. After the digital credential platform generates the digital credential, it can issue the digital credential to the payment information service provider business platform, and then the payment information service provider business platform issues the digital credential to the card wallet client in the user terminal. The digital credential platform can also transmit the digital credential to the corresponding account management platform. The digital credential includes the account static data ciphertext and the account carrier information. The digital credential can reflect the account information and the account carrier information. The account information with higher security requirements can be presented in the digital credential in a ciphertext form, which is not limited here. In some examples, the digital credential can also include one or more of the following: a digital link of the payment card, the digital credential version information, and the desensitized primary account information. The digital connection of the payment card may include a network link address of the digital payment card, through which data such as the card face image of the payment card can be obtained. It should be noted that the card face image of the payment card that can be obtained is desensitized data, e.g., in the card face image, at least part of the card number of the payment card is hid. The digital credential version information can be used to represent the version of the digital credential.

The account static data ciphertext can be obtained by encrypting the account static data, and the account static data represents the account information associated with the payment account. The account information associated with the payment account with high security requirements can be presented in the form of encrypted information. For example, the account information may include one or more of the following: the user's primary account, account type, account level, random number, and payment card product identifier. The primary account is a primary account corresponding to the digital credential. The account type is used to indicate the type of account. For example, if the account is a bank card account, the account type may include a debit card, a credit card, a quasi-credit card, etc. The account level is used to indicate the level of the account. For example, if the account is a bank card account, the account level may include a Tier I account, a Tier II account, a Tier III account, etc. The random number can improve the security and uniqueness of the encrypted account information. The payment card product identifier is used to identify the card product type corresponding to the payment card. In some examples, the account static data includes the account element ciphertext, and the account element ciphertext can be generated based on information with high security requirements, such as generating the account element ciphertext based on the primary account, account type, account level, and payment card product identifier in combination with the random number, and the random number can improve the security and uniqueness of the account element ciphertext. The account information associated with the payment account that has been desensitized may not be encrypted and may be presented in plaintext. For example, the account static data may further include a payment identifier.

The account carrier information includes software carrier information and/or hardware carrier information associated with the payment account. For example, the account carrier information may include a card wallet identifier, a user terminal identifier, and a card wallet account identifier. The card wallet identifier may identify an electronic card wallet; the user terminal identifier may identify a user terminal, such as the user terminal identifier may include the device number of the user terminal, etc.; the card wallet account identifier may identify the user's account in the electronic card wallet, such as the card wallet account identifier may include the user's account name or account number in the electronic card wallet, etc. In some examples, on the basis that the account carrier information includes the card wallet identifier, the user terminal identifier, and the card wallet account identifier, the account carrier information may also include information such as the user real-name authentication result, identity authentication measures, carrier information security digital certificate, security software/hardware information, and biometric identification methods. The user real-name authentication result can indicate whether the user has completed the real-name authentication; the identity authentication measures can indicate the identity authentication measures adopted, such as static password authentication, dynamic verification code authentication, biometric authentication, etc.; the carrier information security digital certificate is a digital certificate used to ensure the security of the account carrier information; the security hardware information can indicate whether the account has security software/hardware protection on the user terminal, such as whether has security chip (Secure Element, SE) protection, whether has Trusted Execution Environment (TEE) protection; and the biometric method is used to represent the biometric method adopted, for example, the biometric method may include fingerprint recognition method, face recognition method, iris recognition method, voiceprint recognition method, finger vein recognition method, etc.

The order key element signature may reflect the digital seal and the order key element information generated by the payment. The order key element signature may be used to verify the authenticity of the current payment and the authenticity of the digital seal. In some examples, the order key element signature may be obtained based on the order key element information, and the order key element includes the key information of the order. For example, the order key element information includes one or more of the following: transaction amount, transaction date, transaction time, transaction type, currency type, order identifier, acceptance terminal identifier, merchant identifier, acquiring institution identifier, merchant location information, or user terminal identifier. The currency type may include a currency code. The order identifier may include an order number. The merchant identifier may include a merchant number. The acquiring institution identifier may include an acquiring institution code. The merchant location information may include the merchant's geographic location information.

In step S202, the digital seal and the order key element signature are verified to obtain a transaction element signature.

The order key element signature may be verified to verify the authenticity of the current payment and the authenticity of the digital seal. In some examples, the order key element signature is obtained according to an encryption algorithm, and the verification for the order key element signature may include the step of decrypting the order key element signature, and the order key element can be obtained by decrypting the order key element signature.

The digital seal may be ciphertext information, and the verification for the digital seal includes decrypting the digital seal to obtain plaintext information, and comparing the plaintext information with the information pre-stored in the digital platform. According to the comparison result, the transaction element signature can be generated based on the plaintext information.

The plaintext information obtained through decryption may include account information, account carrier information, and information obtained based on the order information, thereby enabling the digital credential platform to obtain information on accounts, account carriers, and orders during the payment link. The digital credential platform belongs to the clearing institution party, which enhances the key data acquisition capability of the clearing institution party.

In step S203, the transaction element signature is transmitted to the account management platform through the payment routing gateway device, to cause the account management platform to verify the transaction element signature and complete the payment according to a verification result.

The transaction element signature is obtained based on account information, account carrier information and information obtained based on order information, and can also reflect the account information, account carrier information and order information. The transaction element signature that can reflect the account information, account carrier information and order information is transmitted to the account management platform, thereby enabling the account management platform to obtain information on accounts, account carriers and orders in the payment process. The account management platform belongs to the account management party, which enhances the key data acquisition capability of the account management party.

The account management platform verifies the transaction element signature, and completes the transfer in and out of payment resources such as funds when the verification result indicates that the verification has been passed.

In the embodiments of the present application, the digital credential platform can receive the digital seal and the order key element signature, verify the digital seal and the order key element to obtain the transaction element signature, and transmit the transaction element signature to the account management platform, so that the account management platform verifies the transaction element signature and completes the payment according to the verification result. The digital seal and the order key element signature are generated by the payment information service provider business platform according to the order information associated with the payment and the digital credential in the payment message. In the process of verifying the digital seal and the order key element signature by the digital credential platform, the account information, the account carrier information, and the information obtained based on the order information can be obtained, so that the clearing institution party to which the digital credential platform belongs can obtain the information of the account, the account carrier, and the order in the payment link, thereby enhancing the key data acquisition capability of the clearing institution party. The transaction element signature can reflect the account information, the account carrier information and the order information. In the process of verifying the transaction element signature by the account management platform, the account management party to which the account management platform belongs can obtain the information of the account, the account carrier, and the order in the payment link, thereby enhancing the key data acquisition capability of the account management party. The enhancement of the key data acquisition capability of the clearing institution party and the account management party improves the capability to ensure the electronic payment security of the account.

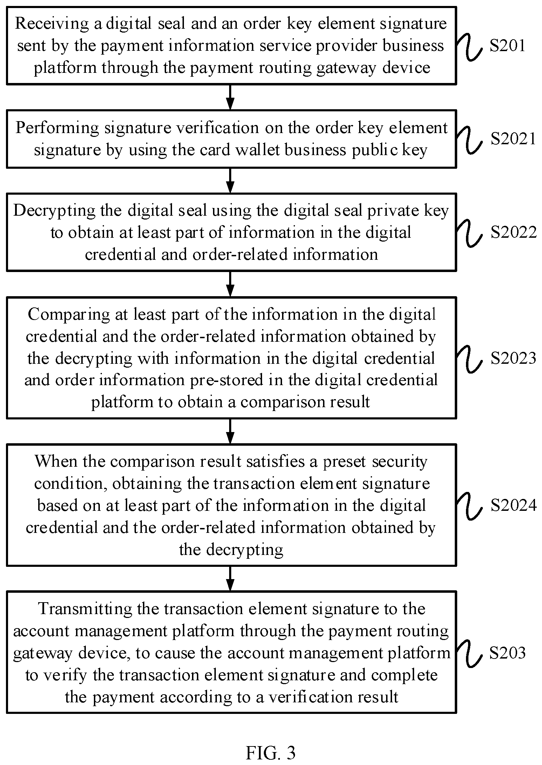

In some embodiments, the digital credential platform stores a card wallet business public key and a digital seal private key. The digital credential platform can use the card wallet business public key and the digital seal private key to perform encryption, decryption, verification and other processes. FIG. 3 is a flow chart of a digital payment processing method provided by another embodiment of the first aspect of the present application. The difference between FIG. 3 and FIG. 2 is that step S202 in FIG. 2 can be specifically refined into steps S2021 to S2024 in FIG. 3.

In step S2021, signature verification is performed on the order key element signature by using the card wallet business public key.

The payment information service provider business platform stores the card wallet business private key, and the digital credential platform can obtain the card wallet business public key from the payment information service provider business platform in advance. The payment information service provider business platform and the digital credential platform can use the card wallet business private key and the card wallet business public key to realize the encryption and decryption of some information transmitted between the two. The order key element signature is obtained by the payment information service provider business platform using the card wallet business private key to encrypt. The order key element signature is obtained by the payment information service provider business platform using the card wallet business private key to process the order key element information and the digital seal. The signature verification on the order key element signature may include the steps of decryption and verification for the order key element signature. The order key element signature is decrypted to obtain the digital seal and the order key element information. The decryption of the order key element signature can adopt a pre-agreed encryption and decryption algorithm, which is not limited here. For example, the SM2 algorithm, the RSA algorithm, etc. can be adopted. The digital seal obtained by decrypting the order key element signature is used to determine the authenticity of the received digital seal. The order key element information obtained by decrypting the order key element signature is used to determine the authenticity of the payment.

In step S2022, the digital seal is decrypted using the digital seal private key to obtain at least part of information in the digital credential and order-related information.

The payment information service provider business platform can obtain the digital seal public key from the digital credential platform in advance. The payment information service provider business platform and the digital credential platform can use the digital seal public key and the digital seal private key to encrypt and decrypt some information transmitted between the two.

A pre-agreed encryption and decryption algorithm may be used to decrypt the digital seal, and the encryption and decryption algorithm is not limited here. For example, the SM2 algorithm, the RSA algorithm, etc. may be used. At least part of the information in the digital credential may obtained by decryption include the account static data ciphertext, the account carrier information, and the transaction counter. The transaction counter (Application Transaction Counter, ATC) is a counter that automatically increases by 1 for each transaction during the validity period of the digital credential. Order-related information is obtained based on the order information. The order-related information obtained by decryption may include user location information and a first summary, and the first summary is a summary corresponding to the order key element information. The type of the first summary is not limited here. For example, the first summary may be a summary obtained according to the SM3 algorithm or a summary obtained according to the SHA256 algorithm.

In step S2023, at least part of the information in the digital credential and the order-related information obtained by the decrypting are compared with information in the digital credential and order information pre-stored in the digital credential platform to obtain a comparison result.

The digital credential is generated by the digital credential platform, the digital credential platform can store the generated digital credential so that during the payment process, the information in the stored digital credential can be compared with at least part of the information in the digital credential obtained by decryption and the order-related information to obtain the comparison result. The comparison result can reflect whether the current payment has security risks. In some examples, the comparison result can also reflect the security risk level of the payment, that is, the degree of security risk.

For example, the account carrier information in the decrypted digital credential may be compared with the account font information in the digital credential pre-stored by the digital credential platform, and the comparison result may include information indicating whether the account carrier information in the decrypted digital credential matches the account font information in the digital credential pre-stored by the digital credential platform. If the account carrier information in the decrypted digital credential is consistent with the account font information in the digital credential pre-stored by the digital credential platform, then it is considered that the account carrier information in the decrypted digital credential matches the account font information in the digital credential pre-stored by the digital credential platform. The user location information in the order-related information obtained by decryption may be compared with the merchant location information in the order key element information of the order information pre-stored by the digital credential platform, and the comparison result may include information indicating whether the user location information in the order-related information obtained by decryption matches the merchant location information in the order key element information of the order information pre-stored by the digital credential platform. If the deviation between the location indicated by the user location information matches the location indicated by the merchant location is within an acceptable range, it can be considered that the user location information matches the merchant location information. The transaction counter in the digital credential obtained by decryption may be compared with the transaction counter in the digital credential pre-stored by the digital credential platform, and the comparison result may include information indicating whether the transaction counter in the digital credential obtained by decryption matches the transaction counter in the digital credential pre-stored by the digital credential platform. If the transaction counter in the digital credential obtained by decryption is consistent with the transaction counter in the digital credential pre-stored by the digital credential platform, it can be considered that the transaction counter in the digital credential obtained by decryption matches the transaction counter in the digital credential pre-stored by the digital credential platform. The first summary in the order-related information obtained by decryption may be compared with the second summary obtained by the digital credential platform based on the pre-stored order key element information, and the comparison result may include information indicating whether the first summary matches the second summary. If the first summary is consistent with the second summary, it can be considered that the first summary matches the second summary.

In step S2024, when the comparison result satisfies a preset security condition, the transaction element signature is obtained based on at least part of the information in the digital credential and the order-related information obtained by the decrypting.

The preset security condition includes a condition for determining whether the security risk meets the security requirement, which can be preset and specifically correspond to the type of information involved in the comparison or the type of information represented by the comparison result. For example, the comparison result may include information representing whether the account carrier information in the decrypted digital credential matches the account font information in the digital credential pre-stored by the digital credential platform, and correspondingly, the preset security condition may include that the account carrier information in the decrypted digital credential matches the account font information in the digital credential pre-stored by the digital credential platform. The comparison result may include information representing whether the user location information in the order-related information obtained by decryption matches the merchant location information in the order key element information of the order information pre-stored by the digital credential platform, and correspondingly, the preset security condition may include that the user location information in the order-related information obtained by decryption matches the merchant location information in the order key element information of the order information pre-stored by the digital credential platform. The comparison result may include information representing whether the transaction counter in the digital credential obtained by decryption matches the transaction counter in the digital credential pre-stored by the digital credential platform, and correspondingly, the preset security condition may include that the transaction counter in the digital credential obtained by decryption matches the transaction counter in the digital credential pre-stored by the digital credential platform. The comparison result may include information representing whether the first summary matches the second summary, and correspondingly, the preset security condition may include that the first summary matches the second summary.

The comparison result satisfies the preset security condition, indicating that the security risk of the payment meets the security requirement, and the subsequent steps can be continued. At least part of the information in the digital credential obtained by decryption and the order-related information can be encrypted once or twice to obtain the transaction element signature.

In some examples, the digital credential platform may also store an account static data privacy key and an account management public key, the digital credential may include a transaction counter, and the order information may include user location information and order key element information. The account static data privacy key may be used to decrypt the account static data ciphertext to obtain the account static data; the account management public key may be used to encrypt the user location information, the account element ciphertext and the transaction counter to obtain the account data ciphertext; and the digital credential platform private key may be used to encrypt the order key element information, the payment identifier, the account data ciphertext, and the account carrier information to obtain the transaction element signature.

The digital credential is generated by the digital credential platform, and the digital credential platform stores a key capable of encrypting and decrypting the account static data, i.e., the account static data privacy key. The algorithm used to decrypt the account static data ciphertext is not limited here. For example, the algorithm used to decrypt the account static data ciphertext may include the SM4 algorithm or the 3DES algorithm, i,e, the triple data encryption algorithm. The account static data includes the account element ciphertext and the payment identifier. The payment identifier is used to indicate the payment account. The account element ciphertext is obtained by the account management platform encrypting the account information. The account element ciphertext can be obtained by the account management platform encrypting using the account management privacy key. The specific content of the account information can be referred to the relevant description in the above embodiments, which will not be repeated here. The algorithm for encrypting the user location information, the account element ciphertext and the transaction counter using the account management public key is not limited here. For example, the SM2 algorithm or the RSA algorithm can be used. The algorithm for encrypting the order key element information, the payment identifier, the account data ciphertext and the account carrier information using the private key of the digital credential platform is not limited here. For example, the SM2 algorithm or the RSA algorithm can be used.

In the embodiments of the present application, the authenticity of the digital seal and the authenticity of the payment can be verified by performing signature verification on the order element signature, which can reduce the possibility of security risk, thereby further improving the capability to ensure the electronic payment security of the account. In addition, based on the user location information, account element ciphertext and transaction counter encryption, the account data ciphertext is generated, and then based on the order key element information, the payment identifier, the account data ciphertext and the account carrier information, the transaction element signature used for verification on the account management platform is generated. The transaction element signature that can reflect the account information and the order information is used to enhance the key data acquisition capability of the account management platform, thereby improving the capability to ensure the electronic payment security of the account.

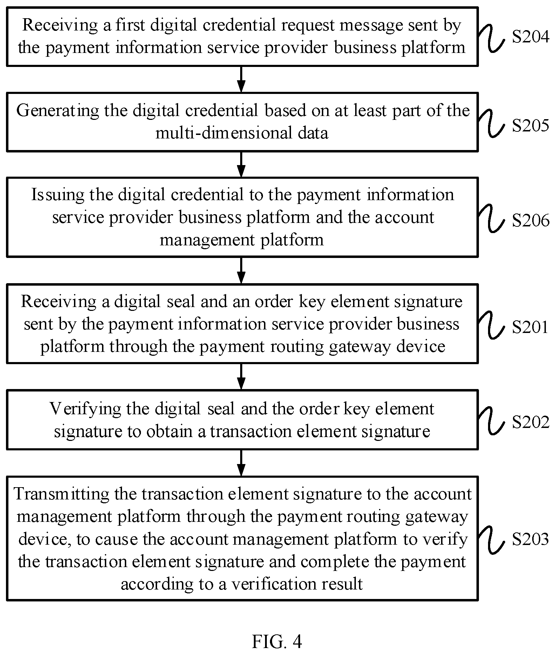

In some embodiments, the digital credential platform can generate the digital credential in response to a request message for digital credential, and transmit the digital credential to the payment information service provider business platform, the user terminal, the account management platform, etc., to achieve the acquisition and binding of the digital credential. There is no plaintext data of account information in the digital credential, which can ensure the security of the digital credential stored in the digital credential platform, the payment information service provider business platform, the user terminal, and the account management platform, and enable the account management platform to use the digital credential to achieve digital management of the account, thereby improving the account management platform's capability to manage the account. FIG. 4 is a flow chart of a digital payment processing method provided by yet another embodiment of the first aspect of the present application. The difference between FIG. 4 and FIG. 2 is that the digital payment processing method shown in FIG. 4 can also include steps S204 to S206.

In step S204, a first digital credential request message sent by the payment information service provider business platform is received.

The first digital credential request message includes multi-dimensional data, and the multi-dimensional data includes user personal information, account information, and account carrier information. The user personal information can be used to identify the user's personal identity. For example, the user personal information can include user name, certificate type, certificate number, mobile phone number, etc., which are not limited here. The data, such as name, certificate number, mobile phone number, etc., with high security requirements can be desensitized by using summary value calculation, algorithms such as SM3 algorithm or SHA256 algorithm can be used, and the desensitized information is used as part of the multi-dimensional data. The account information can include the user's primary account, security signature, etc., which are not limited here. The security signature can be obtained by using the privacy key agreed by the payment information service provider business platform. The specific content of the account information can refer to the relevant description in the above embodiments, which will not be repeated here. The account carrier information can include card wallet identifier, user terminal identifier, account identifier of the user in the electronic card wallet, etc., which are not limited here. The user terminal identifier and the account identifier can be desensitized, and the desensitized information is used as part of the multi-dimensional data. The specific content of the account carrier information can refer to the relevant description in the above embodiments, which will not be repeated here. In some examples, the multi-dimensional data may also include user location information, and the user location information may be obtained by the card wallet client in the user terminal collecting the location information of the user terminal.

The multi-dimensional data can be collected by the card wallet client in the user terminal and uploaded to the payment information service provider business platform, and then uploaded to the digital credential platform by the payment information service provider business platform. The digital credential platform can transmit the user personal information and account information to the account management platform for information verification. If the information verification is passed, the account management platform sends the account information back to the digital credential platform so that the digital credential platform can generate the digital credential.

In step S205, the digital credential is generated based on at least part of the multi-dimensional data.

The digital credential can identify the corresponding relationship among a user, an electronic card wallet and an account. That is, a user, an electronic card wallet and an account with a corresponding relationship corresponds to one digital credential. In the corresponding relationships among two groups of users, electronic card wallets and accounts, if one element among the three is different, the digital credential corresponding to the corresponding relationships between the two groups of users, electronic card wallets and accounts are different.

In some examples, when the information verification is passed, the account management platform sends the account information back to the digital credential platform, which can be implemented as the account management platform sending the account element ciphertext to the digital credential platform. The account management platform can use the account management privacy key to encrypt at least part of the information in the account information, such as encrypting the user's primary account, account type, account level, random number and payment card product identifier in the account information to obtain the account element ciphertext. The digital credential platform uses the account static data privacy key to encrypt the account static data including the account element ciphertext and the payment identifier to obtain the account static data ciphertext. The digital credential can be generated based on the account static data encrypted ciphertext and the account carrier information. In some examples, the digital credential can be generated based on the account static data encrypted ciphertext, digital credential version information, account carrier information, transaction counter, payment card digital link, and desensitized primary account information.

In step S206, the digital credential is issued to the payment information service provider business platform and the account management platform.

The payment information service provider business platform can send the digital credential to the card wallet client in the user terminal, so that the user can use the digital credential to complete the payment process through the card wallet client.

The account management platform receives and stores digital credential and can implement account management based on multi-dimensional data through the digital credential.

On the one hand, the digital credential can reflect account information. On the basis that the digital credential can be verified for authenticity, the digital credential platform can provide the credential management service function for the payment information service provider business platform and the account management platform based on the digital credential. The digital credential can be used to identify the number of bound accounts, the number of opened electronic card wallets, the activation status of the account, and the associated user personal information, etc., and there is no plaintext data of the account in the digital credential, which further ensures the security of account management. On another hand, the digital credential can reflect account carrier information, which may include the card wallet identifier, the user terminal identifier and the card wallet account identifier. The account carrier information enables the digital credential platform and the account management platform can accurately locate the unique digital credential, thereby realizing multi-dimensional digital credential management including electronic card wallets, user terminals, accounts, etc. During the payment process, the digital credential can be combined with order information to further improve the capability to ensure the electronic payment security of the account. On yet another hand, during the payment process, the digital seal generated based on the digital credential can also reflect the user location information, the transaction counter, the order information, etc., to provide dynamic data for the management of digital payment. Based on the comparison result of the information after decryption of the digital seal and the preset security condition, it can further ensure the authenticity and security of the payment, and use the merchant-related information in the order information to facilitate the provision of further payment analysis and query functions.

In some examples, the account management party for applying for the digital credential can be selected through the card wallet client in the user terminal, and the acquisition and binding of the digital credential can be achieved by pulling the digital credential. The account management party can be embodied as the account management party client and/or the account management platform. The above-mentioned first digital credential request message can be initiated by the card wallet client in the user terminal, and sent to the payment information service provider business platform, and then sent by the payment information service provider business platform to the digital credential platform. After the above-mentioned step S204, the digital credential platform can feedback the first digital credential response message to the payment information service provider business platform, so that the payment information service provider business platform sends the first digital credential response message to the card wallet client in the user terminal. The first digital credential response message includes a digital credential application number and an account management institution list. The digital credential application number is an application number assigned by the digital credential platform to the account of the user, indicated in the first digital credential request message, in the electronic card wallet in response to the first digital credential request message. The account management party list represents the account management parties that support the digital credentials, and specifically may include the account management party identifiers or account management platform identifiers that support the digital credentials. The account management party identifier has a corresponding relationship with the account management platform and the account management party client, and the corresponding account management platform and account management party client can be determined according to the account management party identifier. "Supporting digital credential" in the embodiments of the present application may mean having the function of identifying, reading, and processing the digital credential. The card wallet client receives the first digital credential response message and can display the account management party list. The user terminal receives the user's input for selecting from the account management party list, determines the selected account management party, and thus calls up the account management party client, i.e., the selected account management party client, corresponding to the selected account management party, completes the user's login and authorization in the selected account management party client, and the selected account management party client sends a second digital credential request message to the account management platform. In other words, the first digital credential response message is used to enable the selected account management party client in the user terminal to send the second digital credential request message to the account management platform. The account management platform then sends the second digital credential request message to the digital credential platform, and the second digital credential request message includes the digital credential application number. The digital credential platform verifies the user identity based on the digital credential application number. After the verification for the user identity is passed, the account management platform sends the digital credential platform the account-related information including the user's primary account, payment identifier, transaction counter, and account element ciphertext, and the account-related information is obtained based on the account information. In other words, the second digital credential request message is used to indicate the account management platform to send the account information to the digital credential platform.

In some examples, the electronic card wallet for applying for the digital credential can be selected through the account management party client in the user terminal, and the acquisition and binding of the digital credential can be achieved by pushing the digital credential. The electronic card wallet can be embodied as the card wallet client and/or the payment information service provider business platform. Before the above step S204, the digital credential platform can also receive a third digital credential request message sent by the account management platform, and feedback a third digital credential response message to the account management platform, so that the account management platform sends the third digital credential response message to the account management party client in the user terminal. The third digital credential request message can be initiated by the account management party client in the user terminal, sent to the account management platform, and then sent by the account management platform to the digital credential platform. The third digital credential response message includes the digital credential application number and the card wallet client list. The digital credential application number is an application number assigned by the digital credential platform to the account of the user, indicated by the third digital credential request message, in the account management party client in response to the third digital credential request message. The card wallet client list represents the card wallet clients that support the digital credentials, and specifically may include the card wallet client identifiers that support the digital credentials. The card wallet client identifier has a corresponding relationship with the card wallet client and the payment information service provider business platform, and the corresponding card wallet client and the payment information service provider business platform can be determined according to the card wallet client identifier. The account management platform receives the third digital credential response message and can display the card wallet client list. The user terminal receives the user's input for selecting from the card wallet client list, determines the selected card wallet client, and thus calls up the selected card wallet client, completes the user's login and authorization in the selected card wallet client, and the selected card wallet client sends the first digital credential request message to the payment information service provider business platform. In other words, the third digital credential response message is used to enable the selected card wallet client in the user terminal to send the first digital credential request message to the payment information service provider business platform. The payment information service provider business platform then sends the first digital credential request message to the digital credential platform, and the first digital credential request message includes the digital credential application number. The digital credential platform verifies the user identity based on the digital credential application number. After the verification for the user identity is passed, the account management platform sends the account-related information including the user's primary account, payment identifier, transaction counter, and account element ciphertext to the digital credential platform to facilitate the digital credential platform to generate the digital credential.

In some embodiments, the digital credential may be updated, and the update for the digital credential may be initiated by the user terminal, the payment information service provider business platform, or the account management party. The digital credential platform sends a digital credential element update request message to the account management platform or the payment information service provider business platform; receives the digital credential update information fed back by the account management platform or the payment information service provider business platform; updates the digital credential indicated in the digital credential update request message according to the digital credential update information, and obtains the updated digital credential; and sends the updated digital credential to the payment information service provider business platform and the account management platform.

The digital credential update request message can be used to request the update for the digital credential. The digital credential platform needs to obtain the information required for the digital credential update from the account management platform or the payment information service provider business platform. The digital credential platform requests the digital credential update information from the account management platform or the payment information service provider business platform through the digital credential element update request message. The digital credential update information is the information required for the digital credential update. The digital credential platform updates the digital credential according to the digital credential update information, and transmits the updated digital credential to the payment information service provider business platform and the account management platform. The digital credential platform can transmit the updated digital credential to the payment information service provider business platform and the account management platform through the payment routing gateway device. The payment information service provider business platform can also send the updated digital credential to the card wallet client in the user terminal.

In some examples, the digital credential update request message is initiated by the user terminal and sent to the digital credential platform through the payment information service provider business platform. For example, when the user's account in the card wallet client is updated or the user changes the user terminal, the update for the digital credential can be initiated by the user terminal.

For example, the digital credential update process initiated by the user terminal may include steps a1 to a5.

In step a1, the payment information service provider business platform receives a digital credential update request message initiated by the user through the card wallet client, and submits the digital credential update request message to the digital credential platform.

In step a2, the digital credential platform completes the digital credential parsing and sends a digital credential element update request message to the account management platform.

In step a3, the account management platform completes the verification and update for the information in the digital credential and returns the updated information to the digital credential platform.

In step a4, the digital credential platform updates the digital credential and returns the updated digital credential to the payment information service provider business platform.

In step a5, the payment information service provider business platform returns the updated digital credential to the card wallet client in the user terminal.

In some examples, the digital credential update request message is initiated by the payment information service provider business platform and sent to the digital credential platform. For example, in the case where the payment information service provider business platform is updated, the update of the digital credential may be initiated by the payment information service provider business platform.

For example, the digital credential update process initiated by the payment information service provider business platform may include steps b1 to b5.

In step b1, the payment information service provider business platform submits a digital credential update request message to the digital credential platform after obtaining the user's consent.

In step b2, the digital credential platform completes the digital credential parsing and sends a digital credential element update request message to the account management platform.

In step b3, the account management platform completes the verification and update for the information in the digital credential and returns the updated information to the digital credential platform.

In step b4, the digital credential platform updates the digital credential and returns the updated digital credential to the payment information service provider business platform.

In step b5, the payment information service provider business platform returns the updated digital credential to the card wallet client in the user terminal.

In some examples, the digital credential update request message is initiated by the account management platform and sent to the digital credential platform. For example, when the account element ciphertext changes or the account management platform accepts the user's authorization to update the digital credential, the update for the digital credential can be initiated by the account management platform.

For example, the digital credential update process initiated by the account management platform may include steps c1 to c3.

In step c1, the account management platform submits a digital credential update request message, specifying the update for the digital credential in one or more card wallet clients, to the digital credential platform.

In step c2, the digital credential platform requests the payment information service provider business platform to complete the update for the information in the digital credential.

In step c3, the digital credential platform updates the digital credential and returns the updated digital credential to the account management platform.

In some embodiments, the digital credential can be cancelled, and the cancellation of the digital credential can be initiated by the user terminal, the payment information service provider business platform, or the account management party. The digital credential platform receives the digital credential cancellation request message; cancels the digital credential indicated by the digital credential cancellation request message; sends the digital credential element cancellation request message to the account management platform or the payment information service provider business platform; receives the digital credential cancellation result information fed back by the account management platform or the payment information service provider business platform; and sends the digital credential cancellation result information to the payment information service provider business platform or the account management platform.

The digital credential cancellation request message can be used to request the cancellation of the digital credential. The digital credential platform needs to indicate the account management platform or the payment information service provider business platform to cancel the information associated with the digital credential. The digital credential platform indicates the account management platform or the payment information service provider business platform to cancel the information associated with the digital credential through the digital credential element cancellation request message, and generates the digital credential cancellation result information. The digital credential cancellation result information can represent the result of the digital credential cancellation. The digital credential platform transmits the digital credential cancellation result information to the payment information service provider business platform and the account management platform. The digital credential platform can transmit the digital credential cancellation result information to the payment information service provider business platform and the account management platform through the payment routing gateway device. The payment information service provider business platform can also send the digital credential cancellation result information to the card wallet client in the user terminal.

In some examples, the digital credential cancellation request message is initiated by the user terminal and sent to the digital credential platform through the payment information service provider business platform. For example, when the user unbinds the account through the card wallet client in the user terminal, the cancellation of the digital credential can be initiated by the user terminal.

For example, the digital credential cancellation process initiated by the user terminal may include steps d1 to d5.

In step d1, the payment information service provider business platform receives the digital credential cancellation request message initiated by the user through the card wallet client, and submits the digital credential cancellation request message to the digital credential platform.

In step d2, the digital credential platform completes the digital credential parsing, cancels the digital credential, and sends a digital credential element cancellation request message to the account management platform.

In step d3, the account management platform completes the verification and cancellation of the information in the digital credential, and returns the digital credential cancellation result information to the digital credential platform.

In step d4, the digital credential platform returns the digital credential cancellation result information to the payment information service provider business platform.

In step d5, the payment information service provider business platform returns the digital credential cancellation result information to the card wallet client in the user terminal.

In some examples, the digital credential cancellation request message is initiated by the payment information service provider business platform and sent to the digital credential platform. For example, when the payment information service provider business platform is offline, the cancellation of the digital credential can be initiated by the payment information service provider business platform.

For example, the digital credential cancellation process initiated by the payment information service provider business platform may include steps e1 to e5.

In step e1, the payment information service provider business platform submits a digital credential cancellation request message to the digital credential platform after obtaining the user's consent.

In step e2, the digital credential platform completes the digital credential parsing, cancels the digital credential, and sends a digital credential element cancellation request message to the account management platform.

In step e3, the account management platform completes the verification and cancellation of the information in the digital credential, and returns the digital credential cancellation result information to the digital credential platform.

In step e4, the digital credential platform returns the digital credential cancellation result information to the payment information service provider business platform.

In step e5, the payment information service provider business platform returns the digital credential cancellation result information to the card wallet client in the user terminal.

In some examples, the digital credential cancellation request message is initiated by the account management platform and sent to the digital credential platform. For example, when the account validity period expires, the account is reported lost, or the account management platform accepts the user's authorization to cancel the digital credential, the cancellation of the digital credential can be initiated by the account management platform.

For example, the digital credential cancellation process initiated by the account management platform may include steps f1 to f3.

In step f1, the account management platform submits a digital credential cancellation request message, specifying cancellation of the digital credential in one or more card wallet clients, to the digital credential platform.

In step f2, the digital credential platform requests the payment information service provider business platform to complete the cancellation of the information in the digital credential.

In step f3, the digital credential platform cancels the digital credential, returns the digital credential cancellation result information to the account management platform, and asynchronously notifies the payment information service provider business platform.

In some embodiments, the digital seal and the order key element signature in the above embodiments can also be used in offline payment scenarios. After the offline payment of the user terminal meets the offline payment authorization condition and the user terminal interacts with the acceptance terminal through the code for receiving payment and the transaction confirmation code to make offline payment, if the acceptance terminal is in a network recovery state, the digital credential platform receives the digital seal and the order key element signature corresponding to the offline payment transmitted through the payment routing gateway; verifies the digital seal and the order key element signature to obtain the transaction element signature; transmits the transaction element signature to the account management platform through the payment routing gateway device, so that the account management platform verifies the transaction element signature, and completes the payment according to the verification result.

The offline payment authorization condition includes a condition for determining whether the offline payment meets the pre-granted authority, which is not limited here. For example, the offline payment authorization condition may include: the offline payment amount is less than the offline payment authorization amount and the number of offline payments is less than the number of offline payment authorizations. The code for receiving payment is a graphic code generated by the acceptance terminal for receiving payment. The transaction confirmation code is a graphic code generated when the offline payment meets the offline payment authorization condition, which is used to confirm the offline payment. The transaction confirmation code may include information such as the encoding format version, the card wallet certificate public key certificate, the order number, the transaction element signature, and the digital seal, etc. The acceptance terminal can use the card wallet certificate public key certificate included in the transaction confirmation code to perform offline verification on the card wallet certificate public key certificate to obtain the card wallet certificate public key, and use the card wallet certificate public key to verify the transaction element signature, thereby determining the authenticity of the transaction confirmation code. The acceptance terminal collects information associated with offline payment, namely offline payment information, and uploads the offline payment information to the acquiring platform when the network is in recovery state. In some examples, the offline payment information may include the encoding format version, the acquiring institution code, the merchant number, the merchant name, the merchant category code (MCC), the acceptance terminal identifier, the transaction amount, the transaction type, the order identifier, the order sending time, the merchant location information, the user terminal identifier, the card wallet certificate public key certificate, the transaction element signature, the digital seal, etc. The acquiring platform then transmits the offline payment information to the payment routing gateway device, and the payment routing gateway device send it to the digital credential platform. For the specific content of processing of the digital seal and the order key element signature, please refer to the relevant descriptions of step S202, step S203, and steps S2021 to step S2024 in the above embodiments, which will not be repeated here.

In the above embodiment, the payment routing gateway device can realize the information interaction between the digital credential platform, the payment information service provider business platform, and the acquiring platform. The payment routing gateway device can realize the functions of digital credential identification, payment routing, message forwarding addressing, risk monitoring, etc. The payment routing gateway device can also be implemented by multi-layer load sharing and distributed network architecture to ensure low payment delay and high payment success rate. Through the forwarding of the digital credential, the digital seal, the order key element signature, and the transaction element signature by the payment routing gateway device, the sharing of the digital credential, the digital seal, the order key element signature, and the transaction element signature in digital payment is realized, thereby assisting the digital credential platform, the payment information service provider business platform, the account management platform, the acquiring platform, the clearing platform, etc., to realize the functions of payment willingness authentication, digital seal parsing, digital credential verification, order processing, merchant identity verification, and transaction risk monitoring. The payment routing gateway device can provide unified management and functions for domestic and overseas payments. For scenarios involving overseas payments, a global institutional identifier such as the global Legal Entity Identifier (LEI) can be added to the payment process to implement identity verification for domestic and overseas payments, ensuring the consistency and security of the payment process.

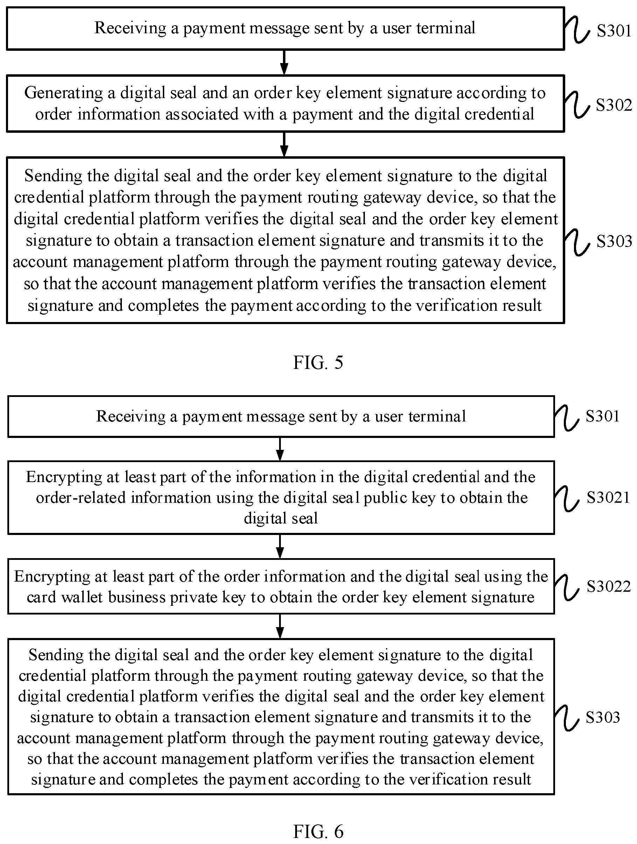

The second aspect of the present application provides a digital payment processing method, which can be applied to a payment information service provider business platform, that is, the digital payment processing method can be performed by the payment information service provider business platform. FIG. 5 is a flow chart of a digital payment processing method provided by an embodiment of the second aspect of the present application. As shown in FIG. 5, the digital payment processing method may include steps S301 to S303.

In step S301, a payment message sent by a user terminal is received.

The payment message includes a digital credential. The digital credential is generated by a digital credential platform and issued to a user terminal. The digital credential may include account static data ciphertext and account carrier information. The account static data ciphertext may be obtained by encrypting account static data. The account static data may represent the account information associated with a payment account. In some examples, the digital credential also includes one or more of the following: a digital link of a payment card, digital credential version information, or desensitized primary account information. For details, please refer to the relevant content in the above embodiments, which will not be repeated here.

In some examples, the account static data ciphertext is obtained by the digital credential platform encrypting the account static data by using an account static data privacy key. The account static data includes an account element ciphertext and the payment identifier. The payment identifier is used to indicate the payment account. The account element ciphertext is obtained by the account management platform encrypting the account information.

In some examples, the account information includes, but is not limited to, one or more of the following: the user's primary account, account type, account level, random number, or payment card product identifier. The specific content of the account information can be found in the relevant description of the above embodiments, which will not be repeated here.

In some examples, the account carrier information includes, but is not limited to, a card wallet identifier, a user terminal identifier, and a card wallet account identifier. For specific content, please refer to the relevant descriptions in the above embodiments, which will not be repeated here.

In step S302, a digital seal and an order key element signature are generated according to order information associated with a payment and the digital credential.

In step S303, the digital seal and the order key element signature are sent to the digital credential platform through the payment routing gateway device, so that the digital credential platform verifies the digital seal and the order key element signature to obtain a transaction element signature and transmits it to the account management platform through the payment routing gateway device, so that the account management platform verifies the transaction element signature and completes the payment according to the verification result.

The specific contents of step S301 to step S303 can be found in the relevant descriptions in the above embodiments, which will not be repeated here.

In the embodiments of the present application, the digital credential platform can receive the digital seal and the order key element signature, verify the digital seal and the order key element to obtain the transaction element signature, and transmit the transaction element signature to the account management platform, so that the account management platform verifies the transaction element signature and completes the payment according to the verification result. The digital seal and the order key element signature are generated by the payment information service provider business platform according to the order information associated with the payment and the digital credential in the payment message. In the process of verifying the digital seal and the order key element signature by the digital credential platform, the account information, the account carrier information, and the information obtained based on the order information can be obtained, so that the clearing institution party to which the digital credential platform belongs can obtain the information of the account, the account carrier, and the order in the payment link, and enhance the key data acquisition capability of the clearing institution party. The transaction element signature can reflect the account information, the account carrier information and the order information. In the process of verifying the transaction element signature by the account management platform, the account management party to which the account management platform belongs can obtain the information of the account, the account carrier, and the order in the payment link, and enhance the key data acquisition capability of the account management party. The enhancement of the key data acquisition capability of the clearing institution party and the account management party improves the capability to ensure the electronic payment security of the account.

In some embodiments, the payment information service provider business platform stores a digital seal public key and a card wallet business private key. The digital seal public key and the card wallet business private key can be used to process at least part of the information in the digital credential and the order-related information to obtain the digital seal and the order key element signature. FIG. 6 is a flow chart of a digital payment processing method provided by another embodiment of the second aspect of the present application. The difference between FIG. 6 and FIG. 5 is that step S302 in FIG. 5 can be specifically refined into step S3021 and step S3022 in FIG. 6.

In step S3021, at least part of the information in the digital credential and the order-related information are encrypted using the digital seal public key to obtain the digital seal.

The order-related information is obtained based on the order information.

In some examples, the digital credential also includes a transaction counter, and the order information includes user location information and order key element information. The payment information service provider business platform can obtain a first summary corresponding to the order key element information based on the order key element information, and the order-related information includes the user location information and the first summary; and use the digital seal public key to encrypt the user location information, the account static data ciphertext, the account carrier information, the transaction counter and the first summary to obtain the digital seal.

The algorithm for obtaining the first summary may include the SM3 algorithm, the SHA256 algorithm, etc., which are not limited here. The algorithm for encrypting the user location information, the account static data ciphertext, the account carrier information, the transaction counter and the first summary using the digital seal public key may include the SM2 algorithm, the RSA algorithm, etc., which are not limited here.

In step S3022, at least part of the order information and the digital seal are encrypted using the card wallet business private key to obtain the order key element signature.

In some examples, the payment information service provider business platform can use the card wallet business private key to encrypt the order key element information and the digital seal to obtain the order key element signature. The algorithm for encrypting the order key element information and the digital seal using the card wallet business private key may include the SM2 algorithm, the RSA algorithm, etc., which are not limited here.

In some examples, the order key element information include one or more of the following: transaction amount, transaction date, transaction time, transaction type, currency type, order identifier, acceptance terminal identifier, merchant identifier, acquiring institution identifier, merchant location information, or user terminal identifier. For specific details, please refer to the relevant descriptions in the above embodiments and will not be repeated here.

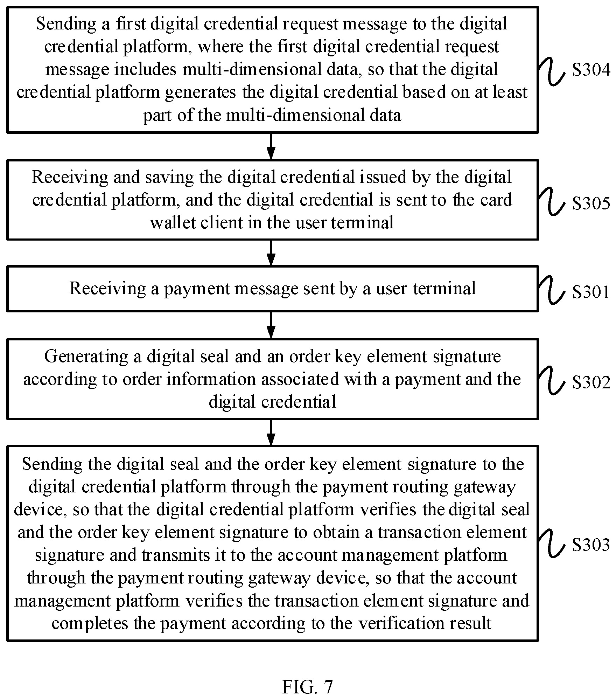

In some embodiments, the payment information service provider business platform may request the digital credential from the digital credential platform, so that the digital credential platform generates the digital credential and transmits the digital credential to the payment information service provider business platform, the user terminal, the account management platform, etc., to achieve the acquisition and binding of the digital credential. FIG. 7 is a flow chart of a digital payment processing method provided by another embodiment of the second aspect of the present application. The difference between FIG. 7 and FIG. 5 is that the digital payment processing method shown in FIG. 7 may also include step S304 and step S305.

In step S304, a first digital credential request message is sent to the digital credential platform, where the first digital credential request message includes multi-dimensional data, so that the digital credential platform generates the digital credential based on at least part of the multi-dimensional data.

The multi-dimensional data includes user personal information, account information, and account carrier information. The digital credential identifies the corresponding relationship among a user, an electronic card wallet and an account.

In step S305, the digital credential issued by the digital credential platform is received and saved, and the digital credential is sent to the card wallet client in the user terminal.

The specific contents of the above step S304 and step S305 can be found in the relevant descriptions in the above embodiments, which will not be repeated here.

In some examples, the account management party for applying for the digital credential can be selected through the card wallet client in the user terminal, and the acquisition and binding of the digital credential can be achieved by pulling the digital credential. The account management party can be embodied as the account management party client and/or the account management platform. After step S304, the payment information service provider business platform can also receive the first digital credential response message fed back by the digital credential platform; send the first digital credential response message to the card wallet client in the user terminal, so that the selected account management party client in the user terminal sends the second digital credential request message to the account management platform.

The first digital credential response message includes the digital credential application number and the account management party list, and the account management party list represents the account management parties that support the digital credentials. The second digital credential request message is used to indicate the account management platform to send the account-related information to the digital credential platform. The account-related information is obtained based on the account information.

The specific contents of the acquisition and binding digital credential by pulling the digital credential can be found in the relevant descriptions in the above embodiments, which will not be repeated here.

In some examples, the electronic card wallet for applying for the digital credential can be selected through the account management party client in the user terminal, and the acquisition and binding of the digital credential can be achieved by pushing the digital credential. The electronic card wallet can be embodied as the card wallet client and/or the payment information service provider business platform. Before step S304, the payment information service provider business platform can also receive the first digital credential request message sent by the selected card wallet client in the user terminal. The selected card wallet client is located in the card wallet client list fed back by the digital credential platform to the account management platform. The card wallet client list represents the card wallet client(s) supporting the digital credential(s).

For the specific contents of the acquisition and binding the digital credential by pushing the digital credential, please refer to the relevant descriptions in the above embodiments, which will not be repeated here.

In some embodiments, the digital credential may be updated, and the update for the digital credential may be initiated by the user terminal, the payment information service provider business platform, or the account management party.

When the update for the digital credential is initiated by the user terminal or the payment information service provider business platform, the payment information service provider business platform may send a digital credential update request message to the digital credential platform, so that the digital credential platform and the account management platform update the digital credential through the digital credential element update request message to obtain the updated digital credential; and receive the updated digital credential sent by the digital credential platform.

In the case where the update for the digital credential is initiated by the user terminal, before sending the digital credential update request message to the digital credential platform, the payment information service provider business platform may receive the digital credential update request message sent by the user terminal.

In the case where the update for the digital credential is initiated by the account management platform, the payment information service provider business platform may receive the digital credential element update request message sent by the digital credential platform; feedback the digital credential update information to the digital credential platform so that the digital credential platform updates the digital credential indicated by the digital credential update request message using the digital credential update information to obtain the updated digital credential; and receive the updated digital credential sent by the digital credential platform. The digital credential element update request message is sent by the digital credential platform in response to the digital credential update request message.

The specific content of updating the digital credential can be found in the relevant description in the above embodiments, which will not be repeated here.

In some embodiments, the digital credential may be cancelled, and the cancellation of the digital credential may be initiated by the user terminal, the payment information service provider business platform, or the account management party.

In the case where the cancellation of digital credential is initiated by the user terminal or the payment information service provider business platform, the payment information service provider business platform may send a digital credential cancellation request message to the digital credential platform; and receive the digital credential cancellation result information sent by the digital credential platform. The digital credential cancellation result information is obtained by the digital credential platform interacted with the account management platform through the digital credential element cancellation request.

In the case where the cancellation of the digital credential is initiated by the user terminal, before sending the digital credential cancellation request message to the digital credential platform, the payment information service provider business platform may receive the digital credential cancellation request message sent by the user terminal.

In the case where the cancellation of the digital credential is initiated by the account management platform, the payment information service provider business platform can receive the digital credential element cancellation request message sent by the digital credential platform, and cancel the information associated with the digital credential in response to the digital credential element cancellation request message; and receive the digital credential cancellation result information sent by the digital credential platform.

To facilitate understanding, the following will take the interaction and respective processing between at least some of the participants including the user, merchant, payment information service provider, acquiring institution party, clearing institution party and account management party as an example to illustrate the payment process and digital credential acquisition process in the digital payment processing method of the above embodiments.

The digital payment processing method in the embodiments of the present application can be applied to the scenario of initiating payment on the merchant client, scenario of scanning code to pay, scenario of being paid by scanning code, and offline payment scenario. The payment process in the digital payment processing method is described below by taking the scenario of initiating payment on the merchant client, scenario of scanning code to pay, scenario of being paid by scanning code, and offline payment scenario as examples.

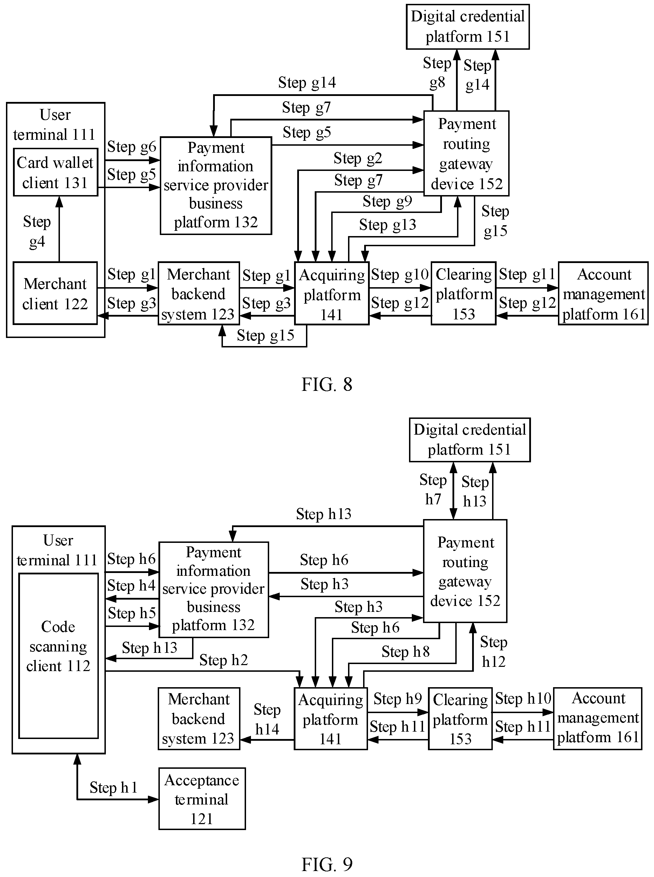

FIG. 8 is a schematic diagram of a payment process of a merchant client initiating payment provided by an embodiment of the present application. As shown in FIG. 8, the payment process of a merchant client initiating payment may include steps g1 to g15.

In step g1, a merchant client 122 may submit an order to a acquiring platform 141 through a merchant backend system 123.

In step g2, the acquiring platform 141 sends the order to the payment routing gateway device 152 and obtains a transaction serial number.

In step g3, the acquiring platform 141 returns the transaction serial number to the merchant client 122 through the merchant backend system 123.

In step g4, the merchant client 122 calls up the card wallet client 131 and transmits transaction information to the card wallet client 131.

In step g5, the card wallet client 131 queries the payment routing gateway device 152 for order information through a payment information service provider business platform 132. The payment information service provider business platform 132 may optionally perform enhanced verification based on the order information.

In step g6, after a user terminal 111, in response to the user's input, completes the payment confirmation and selects a digital credential, the payment information service provider business platform 132 generates a digital seal and an order key element signature.

In step g7, the payment information service provider business platform 132 initiates a payment transaction with the digital credential to the acquiring platform 141 through the payment routing gateway device 152.

In step g8, the payment routing gateway device 152 calls the digital credential platform 151 to parse the digital seal, verify the order key element signature, verify the digital credential, use the user location information, order key element information, etc., to compare to obtain the comparison result, generate the account data ciphertext, and generate the transaction element signature.

In step g9, the payment routing gateway device 152 returns information such as the payment identifier, account data ciphertext, verification result, comparison result, transaction element signature, account carrier information, and order key element information to the acquiring platform 141.

In step g10, the acquiring platform 141 starts the payment process, assembles a request message, which includes the order key element information, payment identifier, account data ciphertext, verification result, transaction element signature, account carrier information, etc., and initiates a payment request to the clearing platform 153.

In step g11, the clearing platform 153 verifies the transaction element signature and sends the transaction to the account management platform 161; and the account management platform 161 decrypts to obtain the account application ciphertext and completes the verification for the transaction element signature. If the verification is passed, the payment is completed.

In step g12, the account management platform 161 returns the transaction result to the acquiring platform 141 through the clearing platform 153.

In step g13, the acquiring platform 141 returns the transaction result and key data to the payment routing gateway device 152.

In step g14, the payment routing gateway device 152 sends the key data to the digital credential platform 151 to complete the generation of the digital credential, and returns the transaction result based on the digital credential to the card wallet client 131 through the payment information service provider business platform 132. The generation of the digital credential in step g14 can be regarded as an update for the digital credential.

In step g15, the payment routing gateway device 152 returns the transaction result to the acquiring platform 141, and the acquiring platform 141 returns the transaction result to the merchant backend system 123. Step g15 can be performed simultaneously with step g14, which is not limited here.

The specific contents of the above steps g1 to g15 can be found in the relevant descriptions in the above embodiments, which will not be repeated here.

FIG. 9 is a schematic diagram of a payment process of scanning code to pay provided by an embodiment of the present application. As shown in FIG. 9, the payment process of scanning code to pay may include steps h1 to h14.

In step h1, a user terminal 111 uses a code scanning client 112 to scan a code for receiving payment of a merchant of an acceptance terminal 121.

In step h2, the code scanning client 112 accesses the Uniform Resource Locator (URL) of the code for receiving payment and determines the transaction amount according to the user's input.

In step h3, the acquiring platform 141 pushes the order to the payment routing gateway device 152, and the payment routing gateway device 152 pushes the order information to the payment information service provider business platform 132 and the acquiring platform 141.

In step h4, the payment information service provider business platform 132 returns the order information to the code scanning client 112. The payment information service provider business platform 132 may also optionally perform enhanced verification based on the order information.

In step h5, after the user terminal 111, in response to the user's input, completes the payment confirmation and selects the digital credential, the user terminal 111 transmits the digital credential and other information to the payment information service provider business platform 132 so that the payment information service provider business platform 132 generates a digital seal and an order key element signature.

In step h6, the code scanning client 112 and the payment information service provider business platform 132 initiate a payment transaction with the digital credential to the acquiring platform 141 through the payment routing gateway device 152.

In step h7, the payment routing gateway device 152 calls the digital credential platform 151 to parse the digital seal and verify the order key element signature; after completing the digital seal parsing, the digital credential platform 151 uses the user location information, order key element information, etc., to compare to obtain the comparison result, generate the account data ciphertext, and generate the transaction element signature.

In step h8, the payment routing gateway device 152 returns information such as the payment identifier, account data ciphertext, verification result, comparison result, transaction element signature, account carrier information, and order key element information to the acquiring platform 141.

In step h9, the acquiring platform 141 starts the payment process, assembles a request message, which includes the order key element information, payment identifier, account data ciphertext, verification result, transaction element signature, account carrier information, etc., and initiates a payment request to the clearing platform 153.

In step h10, the clearing platform 153 verifies the transaction element signature and sends the transaction to the account management platform 161; and the account management platform 161 decrypts to obtain the account application ciphertext and completes the verification for the transaction element signature. If the verification is passed, the payment is completed.

In step h11, the account management platform 161 returns the transaction result to the acquiring platform 141 through the clearing platform 153.

In step h12, the acquiring platform 141 returns the transaction result and key data to the payment routing gateway device 152.

In step h13, the payment routing gateway device 152 sends the key data to the digital credential platform 151 to complete the generation of the digital credential, and returns the transaction result based on the digital credential to the code scanning client 112 through the payment information service provider business platform 132. The generation of the digital credential in step h13 can be regarded as an update for the digital credential.

In step h14, the acquiring platform 141 returns the transaction result to the merchant backend system 123. Step h14 can be performed simultaneously with step h13, which is not limited here.

The specific contents of the above steps h1 to h14 can be found in the relevant descriptions in the above embodiments, which will not be repeated here.

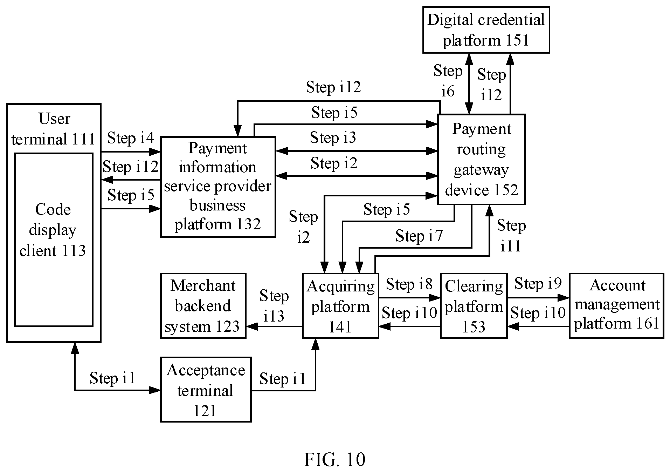

FIG. 10 is a schematic diagram of a payment process of being paid by scanning code provided by an embodiment of the present application. As shown in FIG. 10, the payment process of being paid by scanning code may include steps i1 to i13.

In step i1, the acceptance terminal 121 scans a code for making payment of a code display client 113 in the user terminal 111, and sends the transaction information for determining the digital certificate to the acquiring platform 141.

In step i2, the acquiring platform 141 verifies the code for making payment to the payment information service provider business platform 132 through the payment routing gateway device 152 and obtains the corresponding digital credential.

In step i3, the payment information service provider business platform 132 queries the payment routing gateway device 152 for order information. The payment information service provider business platform 132 may optionally perform enhanced verification based on the order information.

In step i4, after the user terminal 111, in response to the user's input, completes the payment confirmation and selects the digital credential, the payment information service provider business platform 132 generates a digital seal and an order key element signature.

In step i5, the code display client 113 and the payment information service provider business platform 132 initiate a payment transaction with the digital credential to the acquiring platform 141 through the payment routing gateway device 152.

In step i6, the payment routing gateway device 152 calls the digital credential platform 151 to parse the digital seal and verify the order key element signature; after completing the digital seal parsing, the digital credential platform 151 uses the user location information, order key element information, etc., to compare to obtain the comparison result, generate the account data ciphertext, and generate the transaction element signature.

In step i7, the payment routing gateway device 152 returns information such as the payment identifier, account data ciphertext, verification result, comparison result, transaction element signature, account carrier information, and order key element information to the acquiring platform 141.

In step i8, the acquiring platform 141 starts the payment process, assembles a request message, which includes the order key element information, payment identifier, account data ciphertext, verification result, transaction element signature, account carrier information, etc., and initiates a payment request to the clearing platform 153.

In step i9, the clearing platform 153 verifies the transaction element signature and sends the transaction to the account management platform 161; and the account management platform 161 decrypts to obtain the account application ciphertext and completes the verification for the transaction element signature. If the verification is passed, the payment is completed.

In step i10, the account management platform 161 returns the transaction result to the acquiring platform 141 through the clearing platform 153.

In step i11, the acquiring platform 141 returns the transaction result and key data to the payment routing gateway device 152.

In step i12, the payment routing gateway device 152 sends the key data to the digital credential platform 151 to complete the generation of the digital credential, and returns the transaction result based on the digital credential to the code scanning client 112 through the payment information service provider business platform 132. The generation of the digital credential in step i12 can be regarded as an update for the digital credential.

In step i13, the acquiring platform 141 returns the transaction result to the merchant backend system 123. Step i13 can be performed simultaneously with step i12, which is not limited here.

The specific contents of the above steps i1 to i13 can be found in the relevant descriptions in the above embodiments, which will not be repeated here.

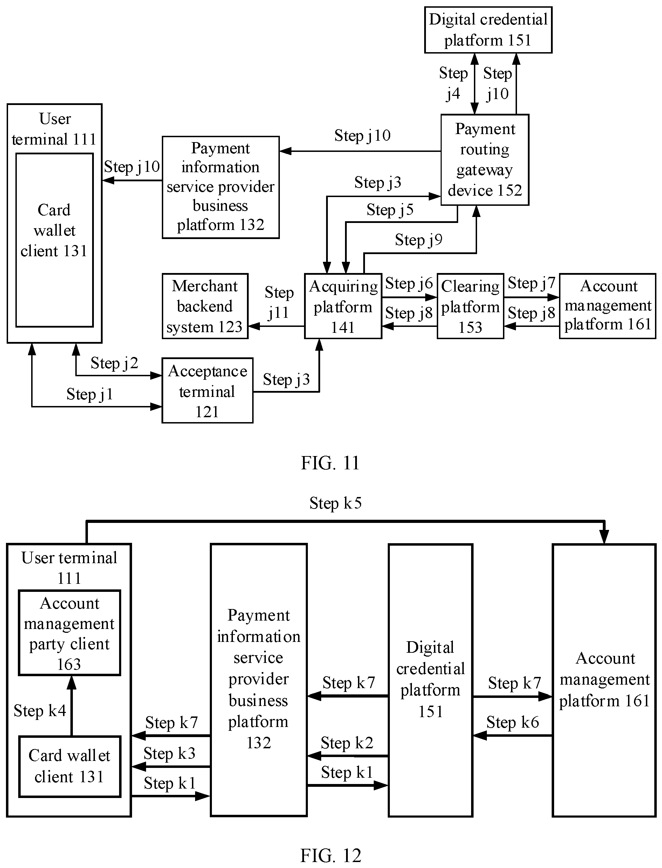

FIG. 11 is a schematic diagram of a payment process of offline payment provided by an embodiment of the present application. As shown in FIG. 11, the payment process of offline payment may include steps j1 to j11.

In step j1, under the condition that the card wallet client 131 and the acceptance terminal 121 support the offline payment function, the user terminal 111 reads the code for receiving payment of the merchant generated by the acceptance terminal 121; and the card wallet client 131 confirms the transaction, the card wallet client 131 deducts the pre-stored transaction authorization amount and transaction authorization number, and generates a transaction confirmation code.

In step j2, the acceptance terminal 121 reads the card wallet certificate public key certificate contained in the transaction confirmation code, uses the digital credential platform public key to verify the card wallet certificate public key certificate offline, obtains the card wallet certificate public key to verify the transaction element signature, and identifies the authenticity of the transaction confirmation code; and the acceptance terminal 121 completes the collection of offline payment information, and sends the offline payment information after the network is recovered.

In step j3, after the network is recovered, the acceptance terminal 121 sends the offline payment information to the acquiring platform 141, and the acquiring platform 141 sends the offline payment information to the payment routing gateway device 152.

In step j4, the payment routing gateway device 152 calls the digital credential platform 151 to parse the digital seal and verify the order key element signature; and after completing the digital seal parsing, the digital credential platform 151 uses the user location information, order key element information, etc., to compare to obtain the comparison result, generate the account data ciphertext, and generate the transaction element signature.

In step j5, the payment routing gateway device 152 returns information such as the payment identifier, account data ciphertext, verification result, comparison result, transaction element signature, account carrier information, and order key element information to the acquiring platform 141.

In step j6, the acquiring platform 141 starts the payment process, assembles a request message, which includes the order key element information, payment identifier, account data ciphertext, verification result, transaction element signature, account carrier information, etc., and initiates a payment request to the clearing platform 153.

In step j7, the clearing platform 153 verifies the transaction element signature and sends the transaction to the account management platform 161; and the account management platform 161 decrypts to obtain the account application ciphertext and completes the verification for the transaction element signature. If the verification is passed, the payment is completed.

In step j8, the account management platform 161 returns the transaction result to the acquiring platform 141 through the clearing platform 153.

In step j9, the acquiring platform 141 returns the transaction result and key data to the payment routing gateway device 152.

In step j10, the payment routing gateway device 152 sends the key data to the digital credential platform 151 to complete the generation of the digital credential, and returns the transaction result based on the digital credential to the card wallet client 131 through the payment information service provider business platform 132. The generation of the digital credential in step j10 can be regarded as an update for the digital credential.

In step j11, the acquiring platform 141 returns the transaction result to the merchant backend system 123. Step j11 can be performed simultaneously with step j10, which is not limited here.

The specific contents of the above steps j1 to j11 can be found in the relevant descriptions in the above embodiments, which will not be repeated here.

The digital credential acquisition process in the digital payment processing method in the embodiments of the present application can be implemented by using digital credential pulling or digital credential pushing method. The following uses the digital credential pulling method and the digital credential pushing method as examples to illustrate the digital credential acquisition process in the digital payment processing method.

FIG. 12 is a schematic diagram of a digital credential acquisition process using a digital credential pulling method provided by an embodiment of the present application. As shown in FIG. 12, the digital credential acquisition process using a digital credential pulling method may include steps k1 to k7.

In step k1, the payment information service provider business platform 132 receives the digital credential request message initiated by the card wallet client 131, and submits the digital credential request message to the digital credential platform 151. The digital credential request message at least contains original element information that can identify the user identity, such as the digital credential request message may include at least part of the multi-dimensional data.

In step k2, the digital credential platform 151 returns an account management part list that supports the digital credentials and a digital credential application number to the payment information service provider business platform 132.

In step k3, the payment information service provider business platform 132 returns the account management party list and the digital credential application number to the card wallet client 131.

In step k4, in response to the user's selection input, a selected account management party is determined, and the process jumps to the account management party client 163 corresponding to the selected account management party, login and authorization are completed through the account management party client 163, and the digital credential application number is transmitted to the account management party client 163.

In step k5, the account management party client 163 initiates a digital credential request message with the digital credential application number to the account management platform 161.

In step k6, the account management platform 161 queries the digital credential platform 151 for the digital credential application number, and after completing the user identity verification, returns account-related information including the user's primary account, payment identifier, transaction counter, and account element ciphertext to the digital credential platform 151, so that the digital credential platform 151 can obtain the account static data according to the account element ciphertext and payment identifier, and generate the digital credential based on the account static data.

In step k7, the digital credential platform 151 sends the digital credential to the account management platform 161 and the payment information service provider business platform 132, and the payment information service provider business platform 132 transmits the digital credential to the card wallet client 131 in the user terminal 111.

The specific contents of the above steps k1 to k7 can be found in the relevant descriptions in the above embodiments, which will not be repeated here.

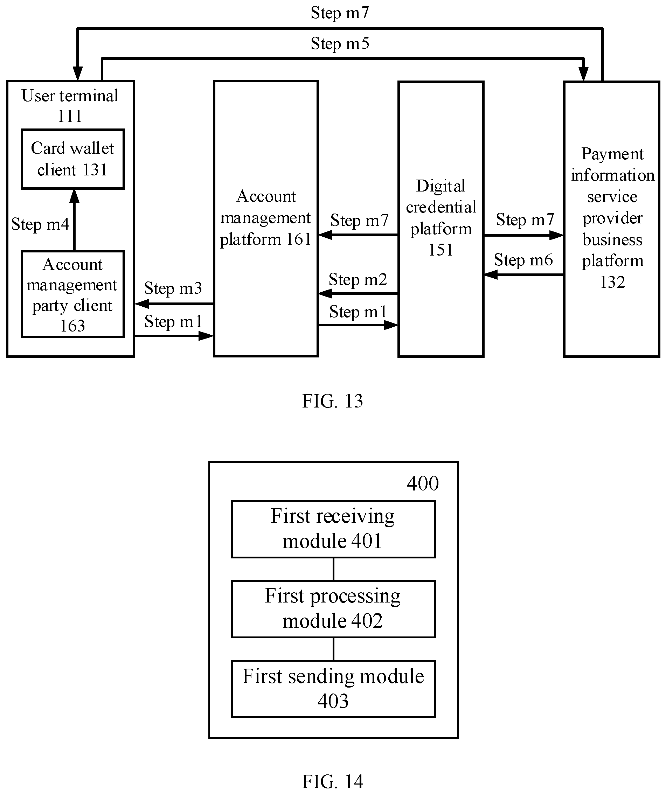

FIG. 13 is a schematic diagram of digital credential acquisition process using a digital credential pushing method according to an embodiment of the present application. As shown in FIG. 13, the digital credential acquisition process using the digital credential pushing method may include steps m1 to m7.

In step m1, the account management platform 161 receives the digital credential request message initiated by the account management party client 163, and submits the digital credential request message to the digital credential platform 151.

In step m2, the digital credential platform 151 returns a card wallet client list supporting the digital credentials and a digital credential application number to the account management platform 161.

In step m3, the account management platform 161 returns the card wallet client list and the digital credential application number to the account management party client 163.

In step m4, in response to the user's selection input, a selected card wallet client 131 is determined, the process jumps to the selected card wallet client 131, login and authorization are completed through the card wallet client 131, and the digital credential application number is transmitted to the selected card wallet client 131.

In step m5, the card wallet client 131 initiates a digital credential request message with the digital credential application number to the payment information service provider business platform 132. The digital credential request message at least contains original element information that can identify the user identity, such as the digital credential request message may include at least part of the multi-dimensional data.

In step m6, the digital credential platform 151 receives the digital credential request message initiated by the payment information service provider business platform 132, and requests the account element ciphertext from the account management platform 161; after the account management platform 161 completes the user identity verification, the account management platform 161 returns account-related information including the user's primary account, payment identifier, transaction counter, and account element ciphertext to the digital credential platform. The digital credential platform 151 obtains the account static data according to the account element ciphertext and payment identifier, and generates a digital credential based on the account static data.

In step m7, the digital credential platform 151 sends the digital credential to the account management platform 161 and the payment information service provider business platform 132, and the payment information service provider business platform 132 transmits the digital credential to the card wallet client 131 in the user terminal 111.

The specific contents of the above steps m1 to m7 can be found in the relevant descriptions in the above embodiments, which will not be repeated here.

The third aspect of the present application provides a digital payment processing apparatus, which is applied to a digital credential platform. FIG. 14 is a schematic structural diagram of a digital payment processing apparatus provided by an embodiment of the third aspect of the present application. As shown in FIG. 14, the digital payment processing apparatus 400 may include a first receiving module 401, a first processing module 402, and a first sending module 403.

The first receiving module 401 may be configured to receive, through a payment routing gateway device, a digital seal and an order key element signature sent by a payment information service provider business platform.

The digital seal and the order key element signature are generated by the payment information service provider business platform according to order information associated with a payment and a digital credential in a payment message associated therewith. The digital credential is generated by the digital credential platform and includes an account static data ciphertext and account carrier information. The account static data ciphertext is obtained by encrypting account static data. The account static data represents account information associated with a payment account.

In some examples, the account carrier information includes a card wallet identifier, a user terminal identifier, and a card wallet account identifier.

In some examples, the digital credential further includes one or more of following: digital link of payment card, digital credential version information, or desensitized primary account information.

In some examples, the account information includes one or more of following: user's primary account, account type, account level, random number, or payment card product identifier.

The first processing module 402 may be configured to verify the digital seal and the order key element signature to obtain a transaction element signature.

The first sending module 403 may be configured to transmit the transaction element signature to an account management platform through the payment routing gateway device, to cause the account management platform to verify the transaction element signature and complete the payment according to a verification result.

In the embodiments of the present application, the digital credential platform can receive the digital seal and the order key element signature, verify the digital seal and the order key element to obtain the transaction element signature, and transmit the transaction element signature to the account management platform, so that the account management platform verifies the transaction element signature and completes the payment according to the verification result. The digital seal and the order key element signature are generated by the payment information service provider business platform according to the order information associated with the payment and the digital credential in the payment message. In the process of verifying the digital seal and the order key element signature by the digital credential platform, the account information, the account carrier information, and the information obtained based on the order information can be obtained, so that the clearing institution party to which the digital credential platform belongs can obtain the information of the account, the account carrier, and the order in the payment link, thereby enhancing the key data acquisition capability of the clearing institution party. The transaction element signature can reflect the account information, the account carrier information and the order information. In the process of verifying the transaction element signature by the account management platform, the account management party to which the account management platform belongs can obtain the information of the account, the account carrier, and the order in the payment link, thereby enhancing the key data acquisition capability of the account management party. The enhancement of the key data acquisition capability of the clearing institution party and the account management party improves the capability to ensure the electronic payment security of the account.

In some embodiments, the digital payment processing apparatus 400 stores a card wallet business public key and a digital seal private key.

The first processing module 402 can be configured to: perform signature verification on the order key element signature by using the card wallet business public key; decrypt the digital seal using the digital seal private key to obtain at least part of information in the digital credential and order-related information, where the order-related information is obtained based on the order information; compare at least part of the information in the digital credential and the order-related information obtained by the decrypting with information in the digital credential and order information pre-stored in the digital credential platform to obtain a comparison result; and when the comparison result satisfies a preset security condition, obtain the transaction element signature based on at least part of the information in the digital credential and the order-related information obtained by the decrypting.

In some embodiments, the digital credential further includes a transaction counter.

At least part of the information in the digital credential obtained by the decrypting includes the account static data ciphertext, the account carrier information and the transaction counter. The order-related information obtained by the decrypting includes user location information and a first summary, where the first summary is a summary corresponding to order key element information.

In some examples, the order key element information includes one or more of following: transaction amount, transaction date, transaction time, transaction type, currency type, order identifier, acceptance terminal identifier, merchant identifier, acquiring institution identifier, merchant location information, or user terminal identifier.

In some embodiments, the digital credential platform further stores an account static data privacy key and an account management public key, the digital credential further includes a transaction counter, and the order information includes user location information and order key element information.

The first processing module 402 can be configured to: decrypt the account static data ciphertext using the account static data privacy key to obtain the account static data, where the account static data includes an account element ciphertext and a payment identifier, where the payment identifier is used to indicate the payment account, and the account element ciphertext is obtained by the account management platform encrypting the account information; encrypt the user location information, the account element ciphertext, and the transaction counter by using the account management public key to obtain an account data ciphertext; and encrypt the order key element information, the payment identifier, the account data ciphertext, and the account carrier information by using a digital credential platform private key to obtain the transaction element signature.

In some embodiments, the first receiving module 401 is further configured to: before the receiving, through the payment routing gateway device, the digital seal and the order key element signature sent by the payment information service provider business platform, receive a first digital credential request message sent by the payment information service provider business platform.

The first digital credential request message includes multi-dimensional data. The multi-dimensional data includes user personal information, the account information, and the account carrier information.

The first processing module 402 is further configured to generate the digital credential based on at least part of the multi-dimensional data. The digital credential identifies a corresponding relationship among a user, a card wallet and an account.

The first sending module 403 is further configured to issue the digital credential to the payment information service provider business platform and the account management platform.

In some examples, the first sending module 403 can further be configured to: after the receiving the first digital credential request message sent by the payment information service provider business platform, feed a first digital credential response message back to the payment information service provider business platform, to cause the payment information service provider business platform to send the first digital credential response message to a card wallet client in a user terminal.

The first digital credential response message is used to enable a selected account management party client in the user terminal to send a second digital credential request message to the account management platform. The first digital credential response message includes a digital credential application number and an account management institution list. The account management party list represents account management parties supporting digital credentials. The second digital credential request message is used to indicate the account management platform to send account-related information to the digital credential platform. The account-related information is obtained based on the account information.

In some examples, the first receiving module 401 may further be configured to: before the receiving the first digital credential request message sent by the payment information service provider business platform, receive a third digital credential request message sent by the account management platform.

The first sending module 403 may further be configured to: feed a third digital credential response message back to the account management platform, to cause the account management platform to send the third digital credential response message to an account management party client in a user terminal.

The third digital credential response message includes a digital credential application number and a card wallet client list. The third digital credential response message is used to indicate a selected card wallet client in the user terminal to send the first digital credential request message to the payment information service provider business platform.

In some embodiments, the first receiving module 401 may further be configured to receive a digital credential update request message.

The first sending module 403 may further be configured to send a digital credential element update request message to the account management platform or the payment information service provider business platform.

The first receiving module 401 may further be configured to receive digital credential update information fed back by the account management platform or the payment information service provider business platform.

The first processing module 402 may further be configured to update the digital credential indicated by the digital credential update request message according to the digital credential update information to obtain an updated digital credential.

The first sending module 403 may further be configured to send the updated digital credential to the payment information service provider business platform and the account management platform.

In some examples, the digital credential update request message is initiated by the user terminal and sent to the digital credential platform through the payment information service provider business platform.

In some examples, the digital credential update request message is initiated by the payment information service provider business platform and sent to the digital credential platform.

In some examples, the digital credential update request message is initiated by the account management platform and sent to the digital credential platform.

In some embodiments, the first receiving module 401 is further configured to receive a digital credential cancellation request message.

The first processing module 402 is further configured to cancel the digital credential indicated by the digital credential cancellation request message.

The first sending module 403 is further configured to send a digital credential element cancellation request message to the account management platform or the payment information service provider business platform.

The first receiving module 401 is further configured to receive digital credential cancellation result information fed back by the account management platform or the payment information service provider business platform.

The first sending module 403 is further configured to send digital credential cancellation result information to the payment information service provider business platform or the account management platform.

In some examples, the digital credential cancellation request message is initiated by a user terminal and sent to the digital credential platform through the payment information service provider business platform.

In some examples, the digital credential cancellation request message is initiated by the payment information service provider business platform and sent to the digital credential platform.

In some examples, the digital credential cancellation request message is initiated by the account management platform and sent to the digital credential platform.

In some embodiments, the first receiving module 401 is further configured to: after an offline payment of a user terminal satisfies an offline payment authorization condition and the offline payment is performed by interacting with an acceptance terminal through a code for receiving payment and the transaction confirmation code, in response to that the acceptance terminal is in a network recovery state, receive the digital seal and the order key element signature corresponding to the offline payment transmitted through the payment routing gateway.

The first processing module 402 is further configured to verify the digital seal and the order key element signature to obtain the transaction element signature.

The first sending module 403 is further configured to transmit the transaction element signature to the account management platform through the payment routing gateway device, to cause the account management platform to verify the transaction element signature and complete the payment according to the verification result.

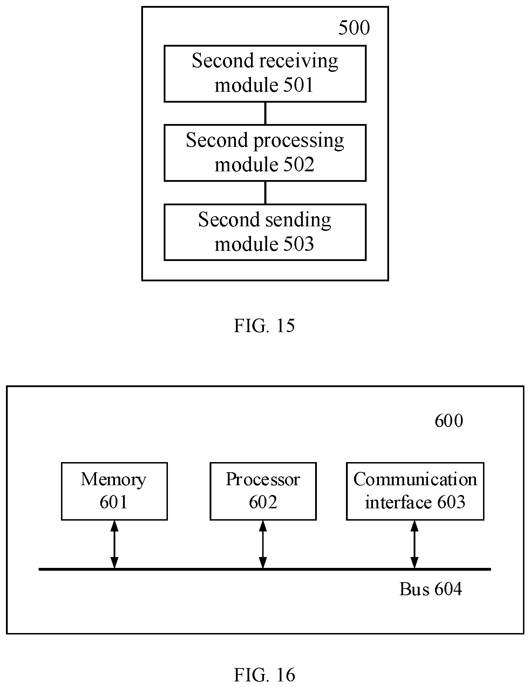

The fourth aspect of the present application provides a digital payment processing apparatus, which is applied to a payment information service provider business platform. FIG. 15 is a schematic structural diagram of a digital payment processing apparatus provided by an embodiment of the fourth aspect of the present application. As shown in FIG. 15, the digital payment processing apparatus 500 may include a second receiving module 501, a second processing module 502, and a second sending module 503.

The second receiving module 501 may be configured to receive a payment message sent by a user terminal.

The payment message includes a digital credential. The digital credential is generated by a digital credential platform and includes an account static data ciphertext and account carrier information. The account static data ciphertext is obtained by encrypting account static data. The account static data represents account information associated with a payment account.

In some examples, the account carrier information includes a card wallet identifier, a user terminal identifier, and a card wallet account identifier.

In some examples, the digital credential further includes one or more of the following: digital link of payment card, digital credential version information, or desensitized primary account information.

In some examples, the account static data ciphertext is obtained by the digital credential platform encrypting the account static data by using an account static data privacy key. The account static data includes an account element ciphertext and an payment identifier. The payment identifier is used to indicate the payment account. The account element ciphertext is obtained by the account management platform encrypting the account information.

In some examples, the account information includes one or more of following: user's primary account, account type, account level, random number, or payment card product identifier.

The second processing module 502 may be configured to generate a digital seal and an order key element signature according to order information associated with a payment and the digital credential.

The second sending module 503 can be configured to send the digital seal and the order key element signature to the digital credential platform through a payment routing gateway device, to cause that the digital credential platform verifies the digital seal and the order key element signature to obtain a transaction element signature and transmits the transaction element signature to the account management platform through the payment routing gateway device, and to cause the account management platform to verify the transaction element signature and complete the payment according to a verification result.

In the embodiment of the present application, the digital credential platform can receive the digital seal and the order key element signature, verify the digital seal and the order key element to obtain the transaction element signature, and transmit the transaction element signature to the account management platform, so that the account management platform verifies the transaction element signature and completes the payment according to the verification result. The digital seal and the order key element signature are generated by the payment information service provider business platform according to the order information associated with the payment and the digital credential in the payment message. In the process of verifying the digital seal and the order key element signature by the digital credential platform, the account information, the account carrier information, and the information obtained based on the order information can be obtained, so that the clearing institution party to which the digital credential platform belongs can obtain the information of the account, the account carrier, and the order in the payment link, thereby enhancing the key data acquisition capability of the clearing institution party. The transaction element signature can reflect the account information, the account carrier information and the order information. In the process of verifying the transaction element signature by the account management platform, the account management party to which the account management platform belongs can obtain the information of the account, the account carrier, and the order in the payment link, thereby enhancing the key data acquisition capability of the account management party. The enhancement of the key data acquisition capability of the clearing institution party and the account management party improves the capability to ensure the electronic payment security of the account.

In some embodiments, the digital payment processing apparatus 500 stores a digital seal public key and a card wallet business private key.

The second processing module 502 can be configured to: encrypt at least part of information in the digital credential and order-related information by using the digital seal public key to obtain the digital seal, where the order-related information is obtained based on the order information; and encrypt at least part of the order information and the digital seal by using the card wallet business private key to obtain the order key element signature.

In some embodiments, the digital credential further includes a transaction counter, the order information includes user location information and order key element information.

The second processing module 502 can be configured to: obtain a first summary corresponding to the order key element information according to the order key element information, where the order-related information includes the user location information and the first summary; and encrypt the user location information, the account static data ciphertext, the account carrier information, the transaction counter and the first summary by using the digital seal public key to obtain the digital seal.

The second processing module 502 can be configured to: encrypt the order key element information and the digital seal by using the card wallet business private key to obtain the order key element signature.

In some examples, the order key element information includes one or more of following: transaction amount, transaction date, transaction time, transaction type, currency type, order identifier, acceptance terminal identifier, merchant identifier, acquiring institution identifier, merchant location information, or user terminal identifier.

In some embodiments, the second sending module 503 is further configured to: before receiving the payment message sent by the user terminal, send a first digital credential request message to the digital credential platform, to cause the digital credential platform to generate the digital credential based on at least part of the multi-dimensional data.

The first digital credential request message includes multi-dimensional data, the multi-dimensional data includes user personal information, the account information, and the account carrier information. The digital credential identifies a corresponding relationship among a user, a card wallet and an account.

The second receiving module 501 can further be configured to: receive and save the digital credential issued by the digital credential platform.

The second sending module 503 may further be configured to send the digital credential to a card wallet client in the user terminal.

In some examples, the second receiving module 501 may be configured to: after the sending the first digital credential request message to the digital credential platform, receive a first digital credential response message fed back by the digital credential platform.

The first digital credential response message includes a digital credential application number and an account management party list. The account management party list represents account management parties supporting digital credentials.

The second sending module 503 may further be configured to send the first digital credential response message to the card wallet client in the user terminal, to cause an selected account management party client in the user terminal to send a second digital credential request message to the account management platform.

The second digital credential request message is used to indicate the account management platform to send account-related information to the digital credential platform. The account-related information is obtained based on the account information.

In some examples, the second receiving module 501 may further be configured to: before the sending the first digital credential request message to the digital credential platform, receive the first digital credential request message sent by a selected card wallet client in the user terminal.

The selected card wallet client is located in a card wallet client list fed back by the digital credential platform to the account management platform. The card wallet client list represents card wallet clients supporting digital credentials.

In some embodiments, the second sending module 503 can further be configured to send a digital credential update request message to the digital credential platform, to cause the digital credential platform and the account management platform to update the digital credential through the digital credential element update request message to obtain an updated digital credential.

The second receiving module 501 may further be configured to: receive the updated digital credential sent by the digital credential platform.

In some examples, the second receiving module 501 may further be configured to: receive the digital credential update request message sent by the user terminal before sending the digital credential update request message to the digital credential platform.

In some embodiments, the second receiving module 501 may further be configured to: receive a digital credential element update request message sent by the digital credential platform.

The digital credential element update request message is sent by the digital credential platform in response to a digital credential update request message.

The second sending module 503 can further be configured to: feed digital credential update information back to the digital credential platform, to cause the digital credential platform to update the digital credential indicated by the digital credential update request message using the digital credential update information to obtain an updated digital credential.

The second receiving module 501 may further be configured to: receive the updated digital credential sent by the digital credential platform.

In some embodiments, the second sending module 503 may further be configured to: send a digital credential cancellation request message to the digital credential platform.

The second receiving module 501 can further be configured to: receive digital credential cancellation result information sent by the digital credential platform, where the digital credential cancellation result information is obtained by the digital credential platform interacted with the account management platform through a digital credential element cancellation request.

In some examples, the second receiving module 501 may further be configured to: receive the digital credential cancellation request message sent by the user terminal before sending the digital credential cancellation request message to the digital credential platform.

In some embodiments, the second receiving module 501 can further be configured to: receive a digital credential element cancellation request message sent by the digital credential platform.

The second processing module 502 can further be configured to: cancel information associated with the digital credential in response to the digital credential element cancellation request message.

The second receiving module 501 can further be configured to: receive digital credential cancellation result information sent by the digital credential platform.

The fifth aspect of the present application further provides an electronic device, which can be used in the digital credential platform in the above-mentioned embodiments. FIG. 16 is a schematic structural diagram of an electronic device provided by an embodiment of the fifth aspect of the present application. As shown in FIG. 16, the electronic device 600 includes a memory 601, a processor 602, and a computer program stored in the memory 601 and executable on the processor 602.

In some examples, the processor 602 may include a central processing unit (CPU), or an application specific integrated circuit (ASIC), or may be configured to implement one or more integrated circuits of the embodiments of the present application.

The memory 601 may include a read-only memory (ROM), a random access memory (RAM), a disk storage medium device, an optical storage medium device, a flash memory device, an electrical, optical or other physical/tangible memory storage device. Therefore, generally, the memory includes one or more tangible (non-transitory) computer-readable storage media (e.g., a memory device) encoded with software including computer executable instructions, and when the software is executed (e.g., by one or more processors), it is operable to perform the operations described with reference to the digital payment processing method in the embodiment of the first aspect of the present application.

The processor 602 runs a computer program corresponding to the executable program code by reading the executable program code stored in the memory 601, so as to implement the digital payment processing method in the above-mentioned embodiment of the first aspect.

In some examples, the electronic device 600 may further include a communication interface 603 and a bus 604. As shown in FIG. 16, the memory 601, the processor 602, and the communication interface 603 are connected via the bus 604 and communicate with each other.

The communication interface 603 is mainly used to realize the communication between the modules, apparatus, units and/or devices in the embodiments of the present application. The communication interface 603 can further be configured to access input devices and/or output devices.

The bus 604 includes hardware, software, or both, coupling the components of the electronic device 600 to each other. By way of example and not limitation, the bus 604 may include an Accelerated Graphics Port (AGP) or other graphics bus, an Enhanced Industry Standard Architecture (EISA) bus, a Front Side Bus (FSB), a Hyper Transport (HT) interconnect, an Industry Standard Architecture (ISA) bus, an InfiniBand interconnect, a Low Pin Count (LPC) bus, a Memory bus, a Micro Channel Architecture (MCA) bus, a Peripheral Component Interconnect (PCI) bus, a PCI-Express (PCI-E) bus, a Serial Advanced Technology Attachment (SATA) bus, a Video Electronics Standards Association Local Bus (VLB) bus, or other suitable buses or a combination of two or more of the above. Where appropriate, the bus 604 may include one or more buses. Although embodiments of the present application describe and illustrate a particular bus, the present application contemplates any suitable bus or interconnection.

The sixth aspect of the present application further provides an electronic device, which can be used for the payment information service provider business platform in the above embodiments. The electronic device may include a memory, a processor, and a computer program stored in the memory and executable on the processor.

The memory may include one or more tangible (non-transitory) computer-readable storage media (e.g., memory devices) encoded with software including computer-executable instructions, and when the software is executed (e.g., by one or more processors), it may be operated to perform the operations described with reference to the digital payment processing method in the embodiment of the second aspect of the present application.

The processor runs a computer program corresponding to the executable program code by reading the executable program code stored in the memory, so as to implement the digital payment processing method in the above-mentioned embodiment of the second aspect.

In some examples, the electronic device may further include a communication interface and a bus. The memory, processor, and communication interface are connected through the bus and communicate with each other. The communication interface is mainly used to implement communication between the modules, apparatus, units, and/or devices in the embodiments of the present application. The input device and/or output device can further be accessed through the communication interface. The bus includes hardware, software, or both, coupling the components of the electronic device to each other.

The connection and implementation of the memory, processor, communication interface and bus in the electronic device of the embodiment the sixth aspect of the present application can refer to the electronic device of the embodiment of the fifth aspect mentioned above. The difference is that the memory, processor, communication interface and bus in the electronic device of the embodiment of the sixth aspect of the present application work together to execute the digital payment processing method of the embodiment of the second aspect of the present application. The specific content can be found in the relevant description in the above embodiment, which will not be repeated here.

A seventh aspect of the present application provides a digital payment processing system, which may include a digital credential platform and a payment information service provider business platform.

The digital credential platform can be configured to execute the digital payment processing method in the above-mentioned embodiment of the first aspect. For specific contents, please refer to the relevant descriptions in the above-mentioned embodiments, which will not be repeated here.

The payment information service provider business platform can be configured to execute the digital payment processing method in the above-mentioned embodiment of the second aspect. For specific contents, please refer to the relevant descriptions in the above-mentioned embodiments, which will not be repeated here.

The digital payment processing system in the embodiment of the present application can achieve the same technical effect as the digital payment method in the above embodiment. To avoid repetition, it will not be described here.

The digital payment processing system in the embodiment of the present application may include at least part of the structures shown in FIG. 1. In some embodiments, the digital payment processing system may further include one or more of the user terminal, the acceptance terminal, the acquiring platform, the payment routing gateway device, the clearing platform, the account management platform, or the marking service provider system, which are not limited here. For specific contents, please refer to the relevant descriptions in the above embodiments, which will not be repeated here.

The eighth aspect of the present application further provides a computer-readable storage medium, on which computer program instructions are stored, and when the computer program instructions are executed by the processor, the digital payment processing method in the embodiment of the first aspect or the digital payment processing method of the embodiment of the second aspect can be implemented, and the same technical effect can be achieved. To avoid repetition, it is not repeated here. The above-mentioned computer-readable storage medium may include a non-transitory computer-readable storage medium, such as a read-only memory (ROM), a random access memory (RAM), a disk or an optical disk, etc., which is not limited here.

The present application embodiment may further provide a computer program product. When the instructions in the computer program product are executed by the processor of the electronic device, the electronic device executes the digital payment processing method of the embodiment of the first aspect or the digital payment processing method of the embodiment of the second aspect, and can achieve the same technical effect, which will not be described here to avoid repetition.

It should be clear that each embodiment in this specification is described in a progressive manner, and the same or similar parts between the embodiments can be referred to each other, and each embodiment focuses on the differences from other embodiments. For apparatus embodiments, device embodiments, system embodiments, computer-readable storage medium embodiments, and computer program product embodiments, the relevant parts can refer to the description parts of the method embodiments. The present application is not limited to the specific steps and structures described above and shown in the figures. Those skilled in the art can make various changes, modifications and additions, or change the order between the steps after understanding the spirit of the present application. In addition, for the sake of brevity, a detailed description of known method technologies is omitted here.

The various aspects of the present application is described according to the method, the flow chart and/or the block diagram of the apparatus (system) and the computer program product of the embodiment of the present application. It should be understood that each square box in the flow chart and/or the block diagram and the combination of each square box in the flow chart and/or the block diagram can be realized by computer program instructions. These computer program instructions can be provided to the processor of a general-purpose computer, a special-purpose computer or other programmable data processing device to produce a machine so that these instructions executed by the processor of the computer or other programmable data processing device enable the realization of the function/action specified in one or more square boxes of the flow chart and/or the block diagram. Such a processor can be but is not limited to a general-purpose processor, a special-purpose processor, a special application processor or a field programmable logic circuit. It can also be understood that each square box in the block diagram and/or the flow chart and the combination of the square boxes in the block diagram and/or the flow chart can also be realized by the dedicated hardware that performs the specified function or action, or can be realized by the combination of dedicated hardware and computer instructions.

Those skilled in the art should understand that the above embodiments are exemplary rather than restrictive. Different technical features appearing in different embodiments can be combined to achieve beneficial effects. Those skilled in the art should be able to understand and implement other variations of the disclosed embodiments based on a study of the drawings, the specification and the claims. In the claims, the term "comprising" does not exclude other devices or steps; the quantifier "one" does not exclude multiple; the terms "first" and "second" are used to indicate names rather than to indicate any specific order. Any figure mark in the claims should not be understood as limiting the scope of protection. The functions of multiple parts appearing in the claims can be implemented by a single hardware or software module. The appearance of certain technical features in different dependent claims does not mean that these technical features cannot be combined to achieve beneficial effects.

## Claims

1. A digital payment processing method, performed by a digital credential platform, wherein the method comprises:
receiving, through a payment routing gateway device, a digital seal and an order key element signature sent by a payment information service provider business platform, wherein the digital seal and the order key element signature are generated by the payment information service provider business platform according to order information associated with a payment and a digital credential in a payment message associated therewith, the digital credential is generated by the digital credential platform and comprises an account static data ciphertext and account carrier information, the account static data ciphertext is obtained by encrypting account static data, and the account static data represents account information associated with a payment account;
verifying the digital seal and the order key element signature to obtain a transaction element signature; and
transmitting the transaction element signature to an account management platform through the payment routing gateway device, to cause the account management platform to verify the transaction element signature and complete the payment according to a verification result.

2. The method according to claim **1,** wherein the digital credential platform stores a card wallet business public key and a digital seal private key; and
the verifying the digital seal and the order key element signature to obtain the transaction element signature comprises:
performing signature verification on the order key element signature by using the card wallet business public key;
decrypting the digital seal using the digital seal private key to obtain at least part of information in the digital credential and order-related information, wherein the order-related information is obtained based on the order information;
comparing at least part of the information in the digital credential and the order-related information obtained by the decrypting with information in the digital credential and order information pre-stored in the digital credential platform to obtain a comparison result; and
based on that the comparison result satisfies a preset security condition, obtaining the transaction element signature based on at least part of the information in the digital credential and the order-related information obtained by the decrypting.

3. The method according to claim 2, wherein the digital credential further comprises a transaction counter, at least part of the information in the digital credential obtained by the decrypting comprises the account static data ciphertext, the account carrier information and the transaction counter, and the order-related information obtained by the decrypting comprises user location information and a first summary, wherein the first summary is a summary corresponding to order key element information.

4. The method according to claim 3, wherein the order key element information comprises one or more of following:
transaction amount, transaction date, transaction time, transaction type, currency type, order identifier, acceptance terminal identifier, merchant identifier, acquiring institution identifier, merchant location information, or user terminal identifier.

5. The method according to claim 2, wherein the digital credential platform further stores an account static data privacy key and an account management public key, the digital credential further comprises a transaction counter, and the order information comprises user location information and order key element information;
the obtaining the transaction element signature based on at least part of the information in the digital credential and the order information obtained by the decrypting comprises:
decrypting the account static data ciphertext using the account static data privacy key to obtain the account static data, wherein the account static data comprises an account element ciphertext and a payment identifier, wherein the payment identifier is used to indicate the payment account, and the account element ciphertext is obtained by the account management platform encrypting the account information;
encrypting the user location information, the account element ciphertext, and the transaction counter by using the account management public key to obtain an account data ciphertext; and
encrypting the order key element information, the payment identifier, the account data ciphertext, and the account carrier information by using a digital credential platform private key to obtain the transaction element signature.

6. The method according to claim 1, wherein the account information comprises one or more of following:
user's primary account, account type, account level, random number, or payment card product identifier.

7. The method according to claim 1, further comprising: before the receiving, through the payment routing gateway device, the digital seal and the order key element signature sent by the payment information service provider business platform,
receiving a first digital credential request message sent by the payment information service provider business platform, wherein the first digital credential request message comprises multi-dimensional data, and the multi-dimensional data comprises user personal information, the account information, and the account carrier information;
generating the digital credential based on at least part of the multi-dimensional data, wherein the digital credential identifies a corresponding relationship among a user, a card wallet and an account; and
issuing the digital credential to the payment information service provider business platform and the account management platform.

8. The method according to claim 7, further comprising: after the receiving the first digital credential request message sent by the payment information service provider business platform,
feeding a first digital credential response message back to the payment information service provider business platform, to cause the payment information service provider business platform to send the first digital credential response message to a card wallet client in a user terminal; wherein
the first digital credential response message is used to enable a selected account management party client in the user terminal to send a second digital credential request message to the account management platform, the first digital credential response message comprises a digital credential application number and an account management institution list, the account management party list represents account management parties supporting digital credentials, and the second digital credential request message is used to indicate the account management platform to send account-related information to the digital credential platform, and the account-related information is obtained based on the account information.

9. The method according to claim 7, further comprising: before the receiving the first digital credential request message sent by the payment information service provider business platform,
receiving a third digital credential request message sent by the account management platform; and
feeding a third digital credential response message back to the account management platform, to cause the account management platform to send the third digital credential response message to an account management party client in a user terminal; wherein the third digital credential response message comprises a digital credential application number and a card wallet client list, and the third digital credential response message is used to indicate a selected card wallet client in the user terminal to send the first digital credential request message to the payment information service provider business platform.

10. The method according to claim **1,** further comprising:
receiving a digital credential update request message;
sending a digital credential element update request message to the account management platform or the payment information service provider business platform;
receiving digital credential update information fed back by the account management platform or the payment information service provider business platform;
updating the digital credential indicated by the digital credential update request message according to the digital credential update information to obtain an updated digital credential; and
sending the updated digital credential to the payment information service provider business platform and the account management platform.

11. The method according to claim 10, wherein:
the digital credential update request message is initiated by a user terminal and sent to the digital credential platform through the payment information service provider business platform;
or,
the digital credential update request message is initiated by the payment information service provider business platform and sent to the digital credential platform;
or,
the digital credential update request message is initiated by the account management platform and sent to the digital credential platform.

12. The method according to claim **1,** further comprising:
receiving a digital credential cancellation request message;
cancelling the digital credential indicated by the digital credential cancellation request message;
sending a digital credential element cancellation request message to the account management platform or the payment information service provider business platform;
receiving digital credential cancellation result information fed back by the account management platform or the payment information service provider business platform; and
sending the digital credential cancellation result information to the payment information service provider business platform or the account management platform.

13. The method according to claim 12, wherein:
the digital credential cancellation request message is initiated by a user terminal and sent to the digital credential platform through the payment information service provider business platform;
or,
the digital credential cancellation request message is initiated by the payment information service provider business platform and sent to the digital credential platform;
or,
the digital credential cancellation request message is initiated by the account management platform and sent to the digital credential platform.

14. The method according to claim **1,** further comprising:
after an offline payment of a user terminal satisfies an offline payment authorization condition and the offline payment is performed by interacting with an acceptance terminal through a code for receiving payment and the transaction confirmation code, in response to that the acceptance terminal is in a network recovery state, receiving the digital seal and the order key element signature corresponding to the offline payment transmitted through the payment routing gateway;
verifying the digital seal and the order key element signature to obtain the transaction element signature; and
transmitting the transaction element signature to the account management platform through the payment routing gateway device, to cause the account management platform to verify the transaction element signature and complete the payment according to the verification result.

15. The method according to any one of claims 1 to 14, wherein the account carrier information comprises a card wallet identifier, a user terminal identifier, and a card wallet account identifier.

16. The method according to any one of claims 1 to 14, wherein the digital credential further comprises one or more of following:
digital link of payment card, digital credential version information, or desensitized primary account information.

17. A digital payment processing method, performed by a payment information service provider business platform, wherein the method comprises:
receiving a payment message sent by a user terminal, wherein the payment message comprises a digital credential, the digital credential is generated by a digital credential platform and comprises an account static data ciphertext and account carrier information, the account static data ciphertext is obtained by encrypting account static data, and the account static data represents account information associated with a payment account;
generating a digital seal and an order key element signature according to order information associated with a payment and the digital credential; and
sending the digital seal and the order key element signature to the digital credential platform through a payment routing gateway device, to cause that the digital credential platform verifies the digital seal and the order key element signature to obtain a transaction element signature and transmits the transaction element signature to the account management platform through the payment routing gateway device, and to cause the account management platform to verify the transaction element signature and complete the payment according to a verification result.

18. The method according to claim 17, wherein the payment information service provider business platform stores a digital seal public key and a card wallet business private key; and
the generating the digital seal and the order key element signature according to the order information associated with the payment and the digital credential, comprises:
encrypting at least part of information in the digital credential and order-related information by using the digital seal public key to obtain the digital seal, wherein the order-related information is obtained based on the order information; and
encrypting at least part of the order information and the digital seal by using the card wallet business private key to obtain the order key element signature.

19. The method according to claim 18, wherein the digital credential further comprises a transaction counter, the order information comprises user location information, and order key element information;
the encrypting at least part of the information in the digital credential and the order-related information by using the digital seal public key to obtain the digital seal comprises:
obtaining a first summary corresponding to the order key element information according to the order key element information, wherein the order-related information comprises the user location information and the first summary; and
encrypting the user location information, the account static data ciphertext, the account carrier information, the transaction counter and the first summary by using the digital seal public key to obtain the digital seal;
the encrypting at least part of the order information and the digital seal by using the card wallet business private key to obtain the order key element signature comprises:
encrypting the order key element information and the digital seal by using the card wallet business private key to obtain the order key element signature.

20. The method according to claim 19, wherein the order key element information comprises one or more of following:
transaction amount, transaction date, transaction time, transaction type, currency type, order identifier, acceptance terminal identifier, merchant identifier, acquiring institution identifier, merchant location information, or user terminal identifier.

21. The method according to claim 17, wherein:
the account static data ciphertext is obtained by the digital credential platform encrypting the account static data by using an account static data privacy key, the account static data comprises an account element ciphertext and an payment identifier, and the payment identifier is used to indicate the payment account; wherein
the account element ciphertext is obtained by the account management platform encrypting the account information.

22. The method according to claim 21, wherein the account information comprises one or more of following:
user's primary account, account type, account level, random number, or payment card product identifier.

23. The method according to claim 17, further comprising: before the receiving the payment message sent by the user terminal,
sending a first digital credential request message to the digital credential platform, to cause the digital credential platform to generate the digital credential based on at least part of the multi-dimensional data, wherein the first digital credential request message comprises multi-dimensional data, the multi-dimensional data comprises user personal information, the account information, and the account carrier information, and the digital credential identifies a corresponding relationship among a user, a card wallet and an account; and
receiving and saving the digital credential issued by the digital credential platform, and sending the digital credential to a card wallet client in the user terminal.

24. The method according to claim 23, further comprising: after the sending the first digital credential request message to the digital credential platform,
receiving a first digital credential response message fed back by the digital credential platform, wherein the first digital credential response message comprises a digital credential application number and an account management party list, and the account management party list represents account management parties supporting digital credentials; and
sending the first digital credential response message to the card wallet client in the user terminal, to cause an selected account management party client in the user terminal to send a second digital credential request message to the account management platform, wherein the second digital credential request message is used to indicate the account management platform to send account-related information to the digital credential platform, and the account-related information is obtained based on the account information.

25. The method according to claim 23, further comprising: before the sending the first digital credential request message to the digital credential platform,
receiving the first digital credential request message sent by a selected card wallet client in the user terminal, wherein the selected card wallet client is located in a card wallet client list fed back by the digital credential platform to the account management platform, and the card wallet client list represents card wallet clients supporting digital credentials.

26. The method according to claim 17, further comprising:
sending a digital credential update request message to the digital credential platform, to cause the digital credential platform and the account management platform to update the digital credential through the digital credential element update request message to obtain an updated digital credential; and receiving the updated digital credential sent by the digital credential platform;
or,
receiving a digital credential element update request message sent by the digital credential platform, wherein the digital credential element update request message is sent by the digital credential platform in response to a digital credential update request message; feeding digital credential update information back to the digital credential platform, to cause the digital credential platform to update the digital credential indicated by the digital credential update request message using the digital credential update information to obtain an updated digital credential; and receiving the updated digital credential sent by the digital credential platform.

27. The method according to claim 26, further comprising: before the sending the digital credential update request message to the digital credential platform,
receiving the digital credential update request message sent by the user terminal.

28. The method according to claim 17, further comprising:
sending a digital credential cancellation request message to the digital credential platform; and receiving digital credential cancellation result information sent by the digital credential platform, wherein the digital credential cancellation result information is obtained by the digital credential platform interacted with the account management platform through a digital credential element cancellation request;
or,
receiving a digital credential element cancellation request message sent by the digital credential platform, cancelling information associated with the digital credential in response to the digital credential element cancellation request message, and receiving digital credential cancellation result information sent by the digital credential platform.

29. The method according to claim 28, further comprising: before the sending the digital credential cancellation request message to the digital credential platform,
receiving the digital credential cancellation request message sent by the user terminal.

30. The method according to any one of claims 17 to 29, wherein the account carrier information comprises a card wallet identifier, a user terminal identifier, and a card wallet account identifier.

31. The method according to any one of claims 17 to 29, wherein the digital credential further comprises one or more of following:
digital link of payment card, digital credential version information, or desensitized primary account information.

32. A digital payment processing apparatus, applied to a digital credential platform, and comprising:
a first receiving module, configured to receive, through a payment routing gateway device, a digital seal and an order key element signature sent by a payment information service provider business platform, wherein the digital seal and the order key element signature are generated by the payment information service provider business platform according to order information associated with a payment and a digital credential in a payment message associated therewith, the digital credential is generated by the digital credential platform and comprises an account static data ciphertext and account carrier information, the account static data ciphertext is obtained by encrypting account static data, and the account static data represents account information associated with a payment account;
a first processing module, configured to verify the digital seal and the order key element signature to obtain a transaction element signature; and
a first sending module, configured to transmit the transaction element signature to an account management platform through the payment routing gateway device, to cause the account management platform to verify the transaction element signature and complete the payment according to a verification result.

33. A digital payment processing apparatus, applied to a payment information service provider business platform, and comprising:
a second receiving module, configured to receive a payment message sent by a user terminal, wherein the payment message comprises a digital credential, the digital credential is generated by a digital credential platform and comprises an account static data ciphertext and account carrier information, the account static data ciphertext is obtained by encrypting account static data, and the account static data represents account information associated with a payment account;
a second processing module, configured to generate a digital seal and an order key element signature according to order information associated with a payment and the digital credential; and
a second sending module, configured to send the digital seal and the order key element signature to the digital credential platform through a payment routing gateway device, to cause that the digital credential platform verifies the digital seal and the order key element signature to obtain a transaction element signature and transmits the transaction element signature to the account management platform through the payment routing gateway device, and to cause the account management platform to verify the transaction element signature and complete the payment according to a verification result.

34. An electronic device, comprising: a processor and a memory storing computer program instructions; wherein
the processor is configured to, when executing the computer program instructions, implement the digital payment processing method according to any one of claims 1 to 16.

35. An electronic device, comprising: a processor and a memory storing computer program instructions; wherein
the processor is configured to, when executing the computer program instructions, implement the digital payment processing method according to any one of claims 17 to 31.

36. A digital payment processing system, comprising:
a digital credential platform, configured to execute the digital payment processing method according to any one of claims 1 to 16;
a payment information service provider business platform, configured to execute the digital payment processing method according to any one of claims 17 to 31.

37. A computer-readable storage medium, storing computer program instructions, wherein when the computer program instructions are executed by a processor, the digital payment processing method according to any one of claims 1 to 31 is implemented.
